# EUROPEAN PATENT APPLICATION

(11) **EP 1 965 522 A2**
(43) Date of publication of application: **03.09.2008**
(21) Application number: 08101560.4
(22) Date of filing: 13.02.2008
(51) Int. Cl.: H04B 17/00

(54) **Multiradio management through quality level control**

(30) Priority: 27.02.2007 US 679640
(71) Applicant: Nokia Corporation, 02150 Espoo (FI)
(72) Inventor: Jaakkola, Mikko, 37560, Lempäälä (FI); Van-Valkenburg, Sander, 00100, Helsinki (FI); Ylänen, Jussi, 37560, Lempäälä (FI); Pernu, Ville, 33720, Tampere (FI)
(74) Representative: Pisani, Diana Jean

(57) **Abstract**

A system for managing the operation of a plurality of radio modules integrated within the same wireless communication device. In at least one embodiment of the present invention, a control strategy may be employed to regulate the quality level of a signal delivered by a codec in order to balance the performance realized in the reproduction certain signals with overall communication stability in the wireless communication device. The regulation of signal quality level may be affected by reducing the bit rate of a codec, changing the codec to select another codec with a lower bit rate, or by performing bitrate scaling with the codec signal.

## Description

### BACKGROUND OF INVENTION

### 1. Field of Invention:

The present invention relates to a system for managing radio modules integrated within a wireless communication device, and more specifically, to a multiradio control system enabled to create an operational schedule for two or more concurrently operating radio modules, wherein a radio module having local control may manage unscheduled communication in view of various inputs.

### 2. Description of Prior Art:

Modem society has quickly adopted, and become reliant upon, handheld devices for wireless communication. For example, cellular telephones continue to proliferate in the global marketplace due to technological improvements in both the quality of the communication and the functionality of the devices. These wireless communication devices (WCDs) have become commonplace for both personal and business use, allowing users to transmit and receive voice, text and graphical data from a multitude of geographic locations. The communication networks utilized by these devices span different frequencies and cover different transmission distances, each having strengths desirable for various applications.

Cellular networks facilitate WCD communication over large geographic areas. These network technologies have commonly been divided by generations, starting in the late 1970s to early 1980s with first generation (1G) analog cellular telephones that provided baseline voice communication, to modem digital cellular telephones. GSM is an example of a widely employed 2G digital cellular network communicating in the 900 MHZ/1.8 GHZ bands in Europe and at 850 MHz and 1.9 GHZ in the United States. This network provides voice communication and also supports the transmission of textual data via the Short Messaging Service (SMS). SMS allows a WCD to transmit and receive text messages of up to 160 characters, while providing data transfer to packet networks, ISDN and POTS users at 9.6 Kbps. The Multimedia Messaging Service (MMS), an enhanced messaging system allowing for the transmission of sound, graphics and video files in addition to simple text, has also become available in certain devices. Soon emerging technologies such as Digital Video Broadcasting for Handheld Devices (DVB-H) will make streaming digital video, and other similar content, available via direct transmission to a WCD. While long-range communication networks like GSM are a well-accepted means for transmitting and receiving data, due to cost, traffic and legislative concerns, these networks may not be appropriate for all data applications.

Short-range wireless networks provide communication solutions that avoid some of the problems seen in large cellular networks. Bluetooth^{™} is an example of a short-range wireless technology quickly gaining acceptance in the marketplace. A 1 Mbps Bluetooth^{™} radio may transmit and receives data at a rate of 720 Kbps within a range of 10 meters, and may transmit up to 100 meters with additional power boosting. Enhanced data rate (EDR) technology also available may enable maximum asymmetric data rates of 1448 Kbps for a 2 Mbps connection and 2178 Kbps for a 3 Mbps connection. A user does not actively instigate a Bluetooth^{™} network. Instead, a plurality of devices within operating range of each other may automatically form a network group called a "piconet". Any device may promote itself to the master of the piconet, allowing it to control data exchanges with up to seven "active" slaves and 255 "parked" slaves. Active slaves exchange data based on the clock timing of the master. Parked slaves monitor a beacon signal in order to stay synchronized with the master. These devices continually switch between various active communication and power saving modes in order to transmit data to other piconet members. In addition to Bluetooth^{™} other popular short-range wireless networks include WLAN (of which "Wi-Fi" local access points communicating in accordance with the IEEE 802.11 standard, is an example), WUSB, UWB, ZigBee (802.15.4, 802.15.4a), and UHF RFID. All of these wireless mediums have features and advantages that make them appropriate for various applications.

More recently, manufacturers have also begun to incorporate various resources for providing enhanced functionality in WCDs (e.g., components and software for performing close-proximity wireless information exchanges). Sensors and/or scanners may be used to read visual or electronic information into a device. A transaction may involve a user holding their WCD in proximity to a target, aiming their WCD at an object (e.g., to take a picture) or sweeping the device over a printed tag or document. Near Field communication (NFC) technologies include machine-readable mediums such as radio frequency identification (RFID), Infra-red (IR) communication, optical character recognition (OCR) and various other types of visual, electronic and magnetic scanning are used to quickly input desired information into the WCD without the need for manual entry by a user.

**[0004]** Device manufacturers continue to incorporate as many of the previously discussed exemplary communication features as possible into wireless communication devices in an attempt to bring powerful, "do-all" devices to market. Devices incorporating long-range, short-range and NFC resources often include multiple mediums for each category. This may allow a WCD to flexibly adjust to its surroundings, for example, communicating both with a WLAN access point and a Bluetooth^{™} communication accessory, possibly at the same time.

**[0005]** Given the large array communication features that may be compiled into a single device, it is foreseeable that a user will need to employ a WCD to its full potential when replacing other productivity related devices. For example, a user may utilize a fully-functioned WCD to replace traditional tools such as individual phones, facsimile machines, computers, storage media, etc. which tend to be cumbersome to both integrate and transport. In at least one use scenario, a WCD may be communicating simultaneously over numerous different wireless mediums. A user may utilize multiple peripheral Bluetooth^{™} devices (e.g., a headset and a keyboard) while having a voice conversation over GSM and interacting with a WLAN access point in order to access the Internet. Problems may occur when these concurrent transactions cause interference with each other. Even if a communication medium does not have an identical operating frequency as another medium, a radio modem may cause extraneous interference to another medium. Further, it is possible for the combined effects of two or more simultaneously operating radios to create intermodulation effects to another bandwidth due to harmonic effects. These disturbances may cause errors resulting in the required retransmission of lost packets, and the overall degradation of performance for one or more communication mediums.

While a total wireless connection loss would be unacceptable to most mobile device users, a slight degradation in signal quality, for example in audio and/or video signal quality, may be tolerated in order to avoid a total communication failure. Audio and/or video signal quality may be controlled by a codec (encoder/decoder or compressor/decompressor). A codec is software and/or hardware that compresses and decompresses audio and/or video data streams. The purpose of a codec is to reduce the size of audio samples and video frames in order to speed up transmission and save storage space. This signal compression may reduce the amount of resources are needed to transmit a signal, but at the same time may also reduce the quality of the audio and/or video signal. The sound quality delivered by a codec does not have to be perfect, and in some cases, the use of a lower quality (e.g., lower bit rate) codec may not even be noticeable. Similarly, video quality may still be clear while not operating at top performance. This lower bit rate codec may use less resources that may be reallocated to other communication.

What is therefore needed is a system for managing wireless resources in the same device that utilize conflicting wireless communication mediums. The system should be able to determine potential conflicts between wireless communication mediums being utilized by radio modules operating in the same wireless communication device. Based on this determination and other factors (e.g., priority between wireless communication mediums), the quality of one or more signals being conveyed by the radio modules should be adjusted in order to reallocate resources to radio modules utilizing other wireless communication mediums. The changing of signal quality may include changes to one or more codecs and/or altering the processing of one or more signals to remove less critical signal information. While the resulting signal may be lower quality, stability of the overall wireless communication in the device may be preserved.

### SUMMARY OF INVENTION

The present invention includes at least a method, device, computer program and radio module for managing the operation of a plurality of radio modules integrated within the same WCD. In at least one embodiment of the present invention, a control strategy may be employed to regulate the quality level of a signal delivered by a codec in order to balance the performance realized in the reproduction certain signals with overall communication stability.

In at least one embodiment of the present invention, a potential communication conflict may be determined between wireless communication mediums being utilized by radio modules integrated within a wireless communication device. The wireless communication mediums may each be implemented by different radio modules, or alternatively, may be utilized substantially concurrently in a single multimode radio module. The one or more radio modules may be directly coupled or through a controller local to the radio module(s) in order to share information regarding the state of message queues assigned to the various wireless communication mediums. This message queue status may be utilized with other operational and scheduling information to determine a priority for each wireless communication medium.

Once a priority of operation has been determined in the wireless communication mediums, the operation of the one or more radio modules may be modified in order to preserve stability in overall WCD communication. A high priority wireless communication medium may require additional resources in the WCD in order to maintain a communication link. To support this requirement, the signal quality may be reduced in another wireless communication medium. This reduction of quality may free up resources for the higher priority wireless communication medium, and take place by, for example, reducing the bit rate of a codec in another wireless communication medium. The reduction in quality to a signal, such as an audio signal, may be unperceivable, or at least tolerable, to a user, and may help preserve stable communications in the WCD. A different codec with lower bit rate may be activated to reduce the signal quality, or alternatively, a strategy to eliminate less critical information from the signal may be employed.

### DESCRIPTION OF DRAWINGS

The invention will be further understood from the following detailed description of a preferred embodiment, taken in conjunction with appended drawings, in which:

FIG. 1 discloses an exemplary wireless operational environment, including wireless communication mediums of different effective range.

FIG. 2 discloses a modular description of an exemplary wireless communication device usable with at least one embodiment of the present invention.

FIG. 3 discloses an exemplary structural description of the wireless communication device previously described in FIG. 2.

FIG. 4A discloses an exemplary operational description of a wireless communication device utilizing a wireless communication medium in accordance with at least one embodiment of the present invention.

FIG. 4B discloses an operational example wherein interference occurs when utilizing multiple radio modems simultaneously within the same wireless communication device.

FIG. 5A discloses an example of single mode radio modules usable with at least one embodiment of the present invention.

FIG. 5B discloses an example of a multimode radio module usable with at least one embodiment of the present invention.

FIG. 5C discloses an exemplary codec control module in accordance with at least one embodiment of the present invention.

FIG. 5D discloses an example of signal quality level adjustment in accordance with at least one embodiment of the present invention.

FIG. 5E discloses a further example of coded control in accordance with at least one embodiment of the present invention.

FIG. 5F discloses an exemplary module integrated with a codec usable for lowering signal quality in accordance with at least one embodiment of the present invention.

FIG. 5G discloses exemplary radio module activity charts showing the results of lowering signal quality in accordance with at least one embodiment of the present invention.

FIG. 6A discloses an exemplary structural description of a wireless communication device including a multiradio controller in accordance with at least one embodiment of the present invention.

FIG. 6B discloses a more detailed structural diagram of FIG. 6A including the multiradio controller and the radio modems.

FIG. 6C discloses an exemplary operational description of a wireless communication device including a multiradio controller in accordance with at least one embodiment of the present invention.

FIG. 7A discloses an exemplary structural description of a wireless communication device including a multiradio control system in accordance with at least one embodiment of the present invention.

FIG. 7B discloses a more detailed structural diagram of FIG. 7A including the multiradio control system and the radio modems.

FIG. 7C discloses an exemplary operational description of a wireless communication device including a multiradio control system in accordance with at least one embodiment of the present invention.

FIG. 8A discloses an exemplary structural description of a wireless communication device including a distributed multiradio control system in accordance with at least one embodiment of the present invention.

FIG. 8B discloses a more detailed structural diagram of FIG. 8A including the distributed multiradio control system and the radio modems.

FIG. 8C discloses an exemplary operational description of a wireless communication device including a distributed multiradio control system in accordance with at least one embodiment of the present invention.

FIG. 9A discloses an exemplary structural description of a wireless communication device including a distributed multiradio control system in accordance with an alternative embodiment of the present invention.

FIG. 9B discloses a more detailed structural diagram of FIG. 9A including the distributed multiradio control system and the radio modems.

FIG. 9C discloses an exemplary operational description of a wireless communication device including a distributed multiradio control system in accordance with the alternative embodiment of the present invention disclosed in FIG. 9A.

FIG. 10 discloses an exemplary information packet usable with at least one embodiment of the present invention.

FIG. 11A discloses an example of a codec control module coupled to a multiradio controller in accordance with at least one embodiment of the present invention.

FIG. 11B discloses an example of a codec quality control module coupled to a multiradio controller in accordance with at least one embodiment of the present invention.

FIG. 12A discloses an exemplary flowchart for a process of controlling the selection of an active codec in accordance with at least one embodiment of the present invention.

FIG. 12B discloses an exemplary flowchart for a process of controlling the adjustment of a codec quality level in accordance with at least one embodiment of the present invention.

### DESCRIPTION OF PREFERRED EMBODIMENT

While the invention has been described in preferred embodiments, various changes can be made therein without departing from the spirit and scope of the invention, as described in the appended claims.

### I. Wireless communication over different communication networks

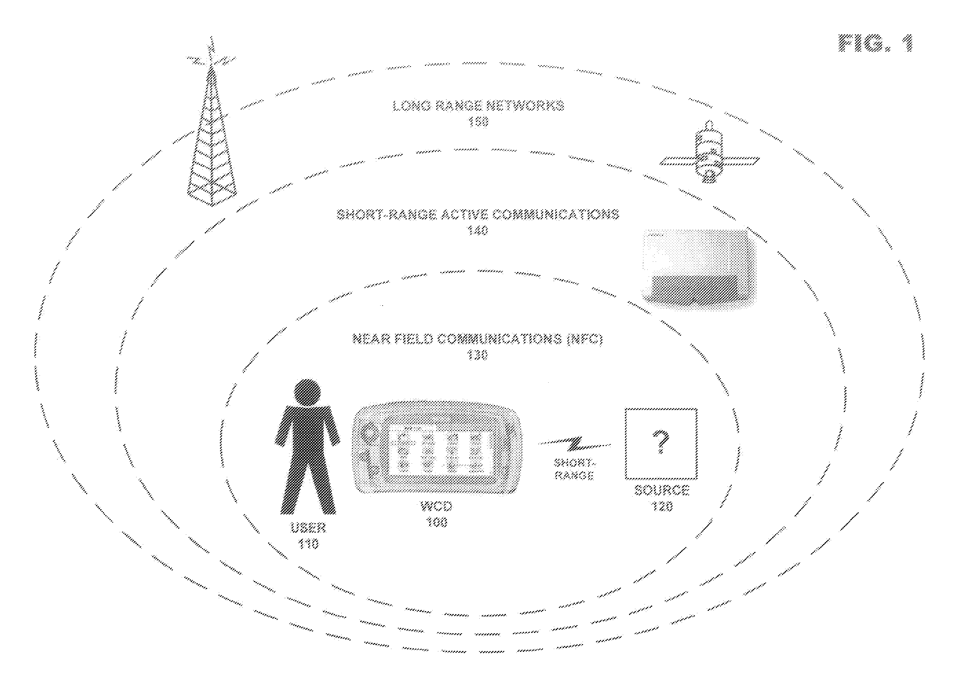

A WCD may both transmit and receive information over a wide array of wireless communication networks, each with different advantages regarding speed, range, quality (error correction), security (encoding), etc. These characteristics will dictate the amount of information that may be transferred to a receiving device, and the duration of the information transfer. FIG. 1 includes a diagram of a WCD and how it interacts with various types of wireless networks.

In the example pictured in FIG. 1, user 110 possesses WCD 100. This device may be anything from a basic cellular handset to a more complex device such as a wirelessly enabled palmtop or laptop computer. Near Field Communication (NFC) 130 includes various transponder-type interactions wherein normally only the scanning device requires its own power source. WCD 100 scans source 120 via short-range communication. A transponder in source 120 may use the energy and/or clock signal contained within the scanning signal, as in the case of RFID communication, to respond with data stored in the transponder. These types of technologies usually have an effective transmission range on the order of ten feet, and may be able to deliver stored data in amounts from a bit to over a megabit (or 125 Kbytes) relatively quickly. These features make such technologies well suited for identification purposes, such as to receive an account number for a public transportation provider, a key code for an automatic electronic door lock, an account number for a credit or debit transaction, etc.

The transmission range between two devices may be extended if both devices are capable of performing powered communication. Short-range active communication 140 includes applications wherein the sending and receiving devices are both active. An exemplary situation would include user 110 coming within effective transmission range of a Bluetooth^{™}, WLAN, UWB, WUSB, etc. access point. In the case of Bluetooth^{™}, a network may automatically be established to transmit information to WCD 100 possessed by user 110. This data may include information of an informative, educational or entertaining nature. The amount of information to be conveyed is unlimited, except that it must all be transferred in the time when user 110 is within effective transmission range of the access point. Due to the higher complexity of these wireless networks, additional time is also required to establish the initial connection to WCD 100, which may be increased if many devices are queued for service in the area proximate to the access point. The effective transmission range of these networks depends on the technology, and may be from some 30 ft. to over 300 ft. with additional power boosting.

Long-range networks 150 are used to provide virtually uninterrupted communication coverage for WCD 100. Land-based radio stations or satellites are used to relay various communication transactions worldwide. While these systems are extremely functional, the use of these systems is often charged on a per-minute basis to user 110, not including additional charges for data transfer (e.g., wireless Internet access). Further, the regulations covering these systems may cause additional overhead for both the users and providers, making the use of these systems more cumbersome.

### II. Wireless communication device

As previously described, the present invention may be implemented using a variety of wireless communication equipment. Therefore, it is important to understand the communication tools available to user 110 before exploring the present invention. For example, in the case of a cellular telephone or other handheld wireless devices, the integrated data handling capabilities of the device play an important role in facilitating transactions between the transmitting and receiving devices.

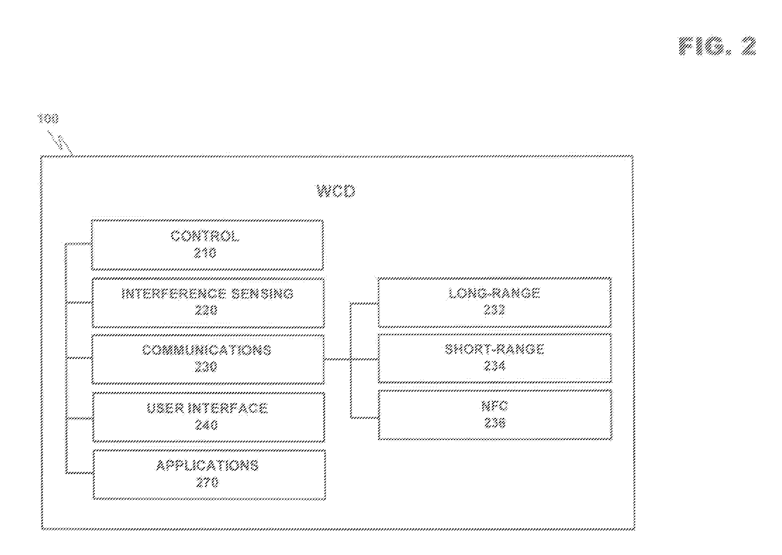

FIG. 2 discloses an exemplary modular layout for a wireless communication device usable with the present invention. WCD 100 is broken down into modules representing the functional aspects of the device. These functions may be performed by the various combinations of software and/or hardware components discussed below.

Control module 210 regulates the operation of the device. Inputs may be received from various other modules included within WCD 100. For example, interference sensing module 220 may use various techniques known in the art to sense sources of environmental interference within the effective transmission range of the wireless communication device. Control module 210 interprets these data inputs, and in response, may issue control commands to the other modules in WCD 100.

Communications module 230 incorporates all of the communication aspects of WCD 100. As shown in FIG. 2, communications module 230 may include, for example, long-range communications module 232, short-range communications module 234 and NFC module 236. Communications module 230 may utilize one or more of these sub-modules to receive a multitude of different types of communication from both local and long distance sources, and to transmit data to recipient devices within the transmission range of WCD 100. Communications module 230 may be triggered by control module 210, or by control resources local to the module responding to sensed messages, environmental influences and/or other devices in proximity to WCD 100.

User interface module 240 includes visual, audible and tactile elements which allow the user 110 to receive data from, and enter data into, the device. The data entered by user 110 may be interpreted by control module 210 to affect the behavior of WCD 100. User-inputted data may also be transmitted by communications module 230 to other devices within effective transmission range. Other devices in transmission range may also send information to WCD 100 via communications module 230, and control module 210 may cause this information to be transferred to user interface module 240 for presentment to the user.

Applications module 250 incorporates all other hardware and/or software applications on WCD 100. These applications may include sensors, interfaces, utilities, interpreters, data applications, etc., and may be invoked by control module 210 to read information provided by the various modules and in turn supply information to requesting modules in WCD 100.

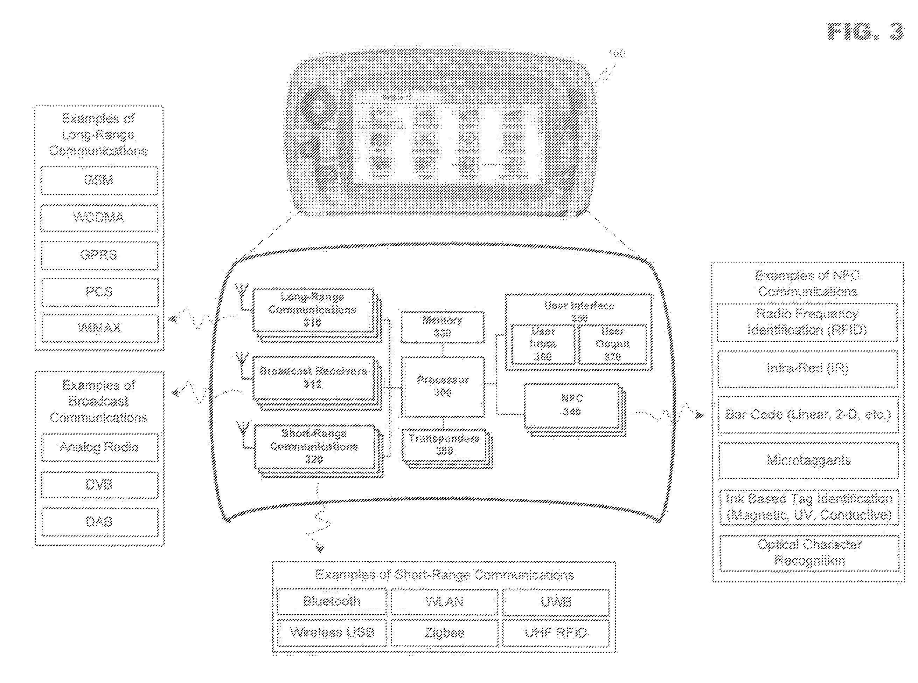

FIG. 3 discloses an exemplary structural layout of WCD 100 according to an embodiment of the present invention that may be used to implement the functionality of the modular system previously described in FIG. 2. Processor 300 controls overall device operation. As shown in FIG. 3, processor 300 is coupled to one or more communications sections 310, 320 and 340. Processor 300 may be implemented with one or more microprocessors that are each capable of executing software instructions stored in memory 330.

Memory 330 may include random access memory (RAM), read only memory (ROM), and/or flash memory, and stores information in the form of data and software components (also referred to herein as modules). The data stored by memory 330 may be associated with particular software components. In addition, this data may be associated with databases, such as a bookmark database or a business database for scheduling, email, etc.

The software components stored by memory 330 include instructions that can be executed by processor 300. Various types of software components may be stored in memory 330. For instance, memory 330 may store software components that control the operation of communication sections 310, 320 and 340. Memory 330 may also store software components including a firewall, a service guide manager, a bookmark database, user interface manager, and any communication utilities modules required to support WCD 100.

Long-range communications 310 performs functions related to the exchange of information over large geographic areas (such as cellular networks) via an antenna. These communication methods include technologies from the previously described 1G to 3G. In addition to basic voice communication (e.g., via GSM), long-range communications 310 may operate to establish data communication sessions, such as General Packet Radio Service (GPRS) sessions and/or Universal Mobile Telecommunications System (UMTS) sessions. Also, long-range communications 310 may operate to transmit and receive messages, such as short messaging service (SMS) messages and/or multimedia messaging service (MMS) messages.

As a subset of long-range communications 310, or alternatively operating as an independent module separately connected to processor 300, transmission receiver 312 allows WCD 100 to receive transmission messages via mediums such as Digital Video Broadcast for Handheld Devices (DVB-H). These transmissions may be encoded so that only certain designated receiving devices may access the transmission content, and may contain text, audio or video information. In at least one example, WCD 100 may receive these transmissions and use information contained within the transmission signal to determine if the device is permitted to view the received content.

Short-range communications 320 is responsible for functions involving the exchange of information across short-range wireless networks. As described above and depicted in FIG. 3, examples of such short-range communications 320 are not limited to Bluetooth^{™}, WLAN, UWB and Wireless USB connections. Accordingly, short-range communications 320 performs functions related to the establishment of short-range connections, as well as processing related to the transmission and reception of information via such connections.

NFC 340, also depicted in FIG. 3, may provide functionality related to the short-range scanning of machine-readable data. For example, processor 300 may control components in NFC 340 to generate RF signals for activating an RFID transponder, and may in turn control the reception of signals from an RFID transponder. Other short-range scanning methods for reading machine-readable data that may be supported by the NFC 340 are not limited to IR communication, linear and 2-D (e.g., QR) bar code readers (including processes related to interpreting UPC labels), and optical character recognition devices for reading magnetic, UV, conductive or other types of coded data that may be provided in a tag using suitable ink. In order for the NFC 340 to scan the aforementioned types of machine-readable data, the input device may include optical detectors, magnetic detectors, CCDs or other sensors known in the art for interpreting machine-readable information.

As further shown in FIG. 3, user interface 350 is also coupled to processor 300. User interface 350 facilitates the exchange of information with a user. FIG. 3 shows that user interface 350 includes a user input 360 and a user output 370. User input 360 may include one or more components that allow a user to input information. Examples of such components include keypads, touch screens, and microphones. User output 370 allows a user to receive information from the device. Thus, user output portion 370 may include various components, such as a display, light emitting diodes (LED), tactile emitters and one or more audio speakers.

### Exemplary displays include liquid crystal displays (LCDs), and other video displays.

WCD 100 may also include one or more transponders 380. This is essentially a passive device that may be programmed by processor 300 with information to be delivered in response to a scan from an outside source. For example, an RFID scanner mounted in an entryway may continuously emit radio frequency waves. When a person with a device containing transponder 380 walks through the door, the transponder is energized and may respond with information identifying the device, the person, etc. In addition, a scanner may be mounted (e.g., as previously discussed above with regard to examples of NFC 340) in WCD 100 so that it can read information from other transponders in the vicinity.

Hardware corresponding to communications sections 310, 312, 320 and 340 provide for the transmission and reception of signals. Accordingly, these portions may include components (e.g., electronics) that perform functions, such as modulation, demodulation, amplification, and filtering. These portions may be locally controlled, or controlled by processor 300 in accordance with software communication components stored in memory 330.

The elements shown in FIG. 3 may be constituted and coupled according to various techniques in order to produce the functionality described in FIG. 2. One such technique involves coupling separate hardware components corresponding to processor 300, communications sections 310, 312 and 320, memory 330, NFC 340, user interface 350, transponder 380, etc. through one or more bus interfaces (which may be wired or wireless bus interfaces). Alternatively, any and/or all of the individual components may be replaced by an integrated circuit in the form of a programmable logic device, gate array, ASIC, multi-chip module, etc. programmed to replicate the functions of the stand-alone devices. In addition, each of these components is coupled to a power source, such as a removable and/or rechargeable battery (not shown).

The user interface 350 may interact with a communication utilities software component, also contained in memory 330, which provides for the establishment of service sessions using long-range communications 310 and/or short-range communications 320. The communication utilities component may include various routines that allow the reception of services from remote devices according to mediums such as the Wireless Application Medium (WAP), Hypertext Markup Language (HTML) variants like Compact HTML (CHTML), etc.

### III. Exemplary operation of a wireless communication device including potential interference problems encountered.

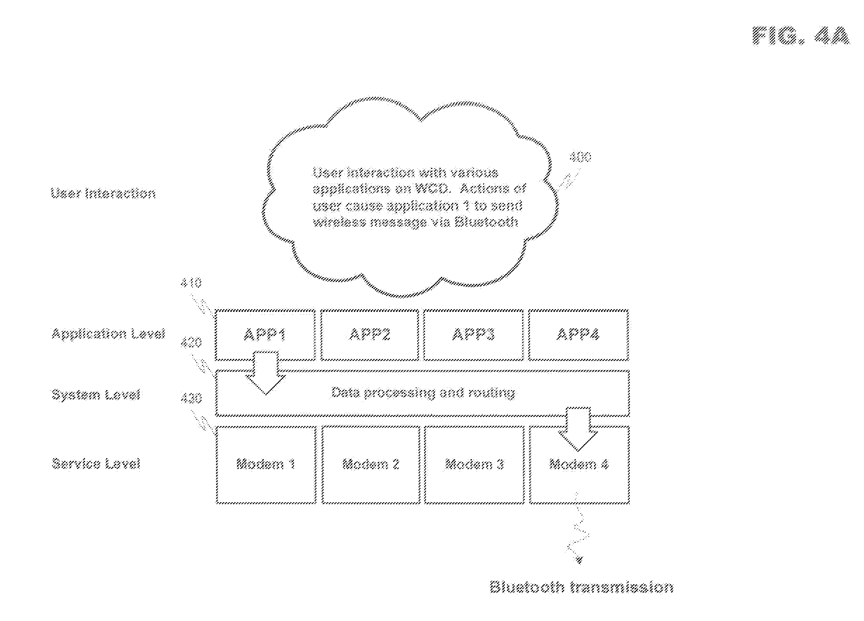

FIG. 4A discloses a stack approach to understanding the operation of a WCD in accordance with at least one embodiment of the present invention. At the top level 400, user 110 interacts with WCD 100. The interaction involves user 110 entering information via user input 360 and receiving information from user output 370 in order to activate functionality in application level 410. In the application level, programs related to specific functionality within the device interact with both the user and the system level. These programs include applications for visual information (e.g., web browser, DVB-H receiver, etc.), audio information (e.g., cellular telephone, voice mail, conferencing software, DAB or analog radio receiver, etc.), recording information (e.g., digital photography software, word processing, scheduling, etc.) or other information processing. Actions initiated at application level 410 may require information to be sent from or received into WCD 100. In the example of FIG. 4A, data is requested to be sent to a recipient device via Bluetooth^{™} communication. As a result, application level 410 may then call resources in the system level to initiate the required processing and routing of data.

System level 420 processes data requests and routes the data for transmission. Processing may include, for example, calculation, translation, conversion and/or packetizing the data. The information may then be routed to an appropriate communication resource in the service level. If the desired communication resource is active and available in the service level 430, the packets may be routed to a radio modem for delivery via wireless transmission. There may be a plurality of modems operating using different wireless mediums. For example, in FIG. 4A, modem 4 is activated and able to send packets using Bluetooth^{™} communication. However, a radio modem (as a hardware resource) need not be dedicated only to a specific wireless medium, and may be used for different types of communication depending on the requirements of the wireless medium and the hardware characteristics of the radio modem.

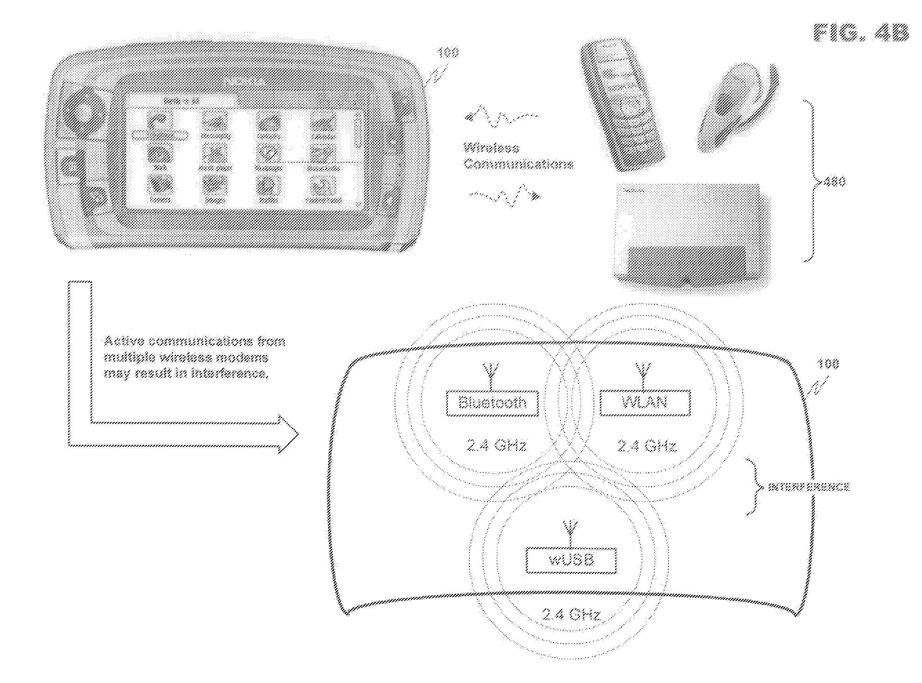

FIG. 4B discloses a situation wherein the above described exemplary operational process may cause more than one radio modem to become active. In this case, WCD 100 is both transmitting and receiving information via wireless communication over a multitude of mediums. WCD 100 may be interacting with various secondary devices such as those grouped at 480. For example, these devices may include cellular handsets communicating via long-range wireless communication like GSM, wireless headsets communicating via Bluetooth^{™}, Internet access points communicating via WLAN, etc.

Problems may occur when some or all of these communications are carried on simultaneously. As further shown in FIG. 4B, multiple modems operating simultaneously may cause interference for each other. Such a situation may be encountered when WCD 100 is communicating with more than one external device (as previously described). In an exemplary extreme case, devices with modems simultaneously communicating via Bluetooth^{™}, WLAN and wireless USB would encounter substantial overlap since all of these wireless mediums operate in the 2.4 GHz band. The interference, shown as an overlapping portion of the fields depicted in FIG. 4B, would cause packets to be lost and the need for retransmission of these lost packets. Retransmission requires that future time slots be used to retransmit lost information, and therefore, overall communication performance will at least be reduced, if the signal is not lost completely. The present invention, in at least one embodiment, seeks to manage problematic situations where possibly conflicting communications may be occurring simultaneously so that interference is minimized or totally avoided, and as a result, speed and quality are maximized.

### IV. Radio modem signal control in a wireless communication device.

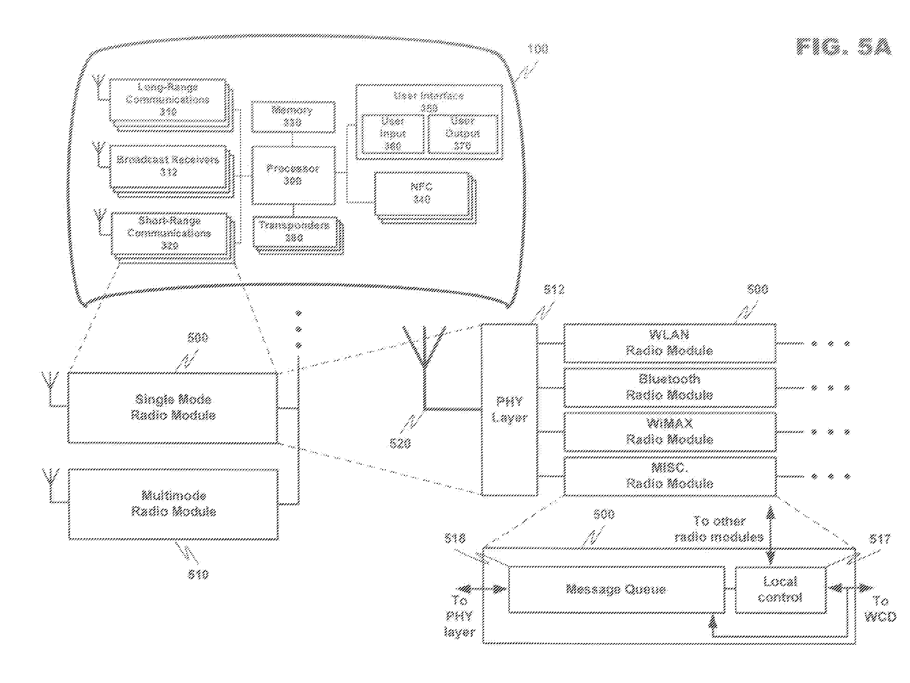

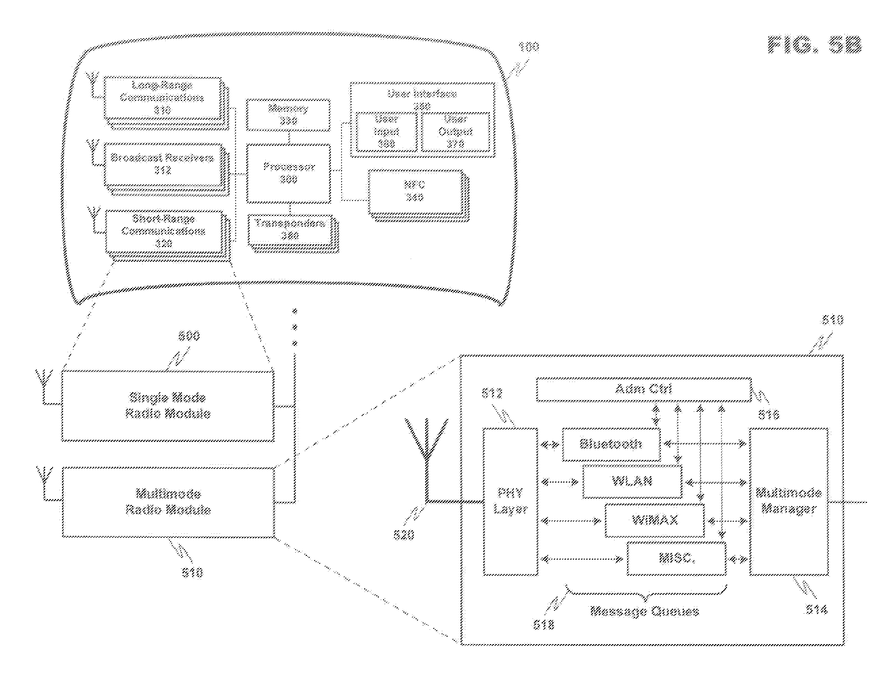

FIG. 5A discloses an example of different types of radio modules that may be implemented in WCD 100. The choice of radio modules to utilize may depend on various requirements for functionality in WCD 100, or conversely, on limitations in the device such as space or power limitations. Radio module 500 is a single mode radio module and radio module 510 is a multimode radio module (explained further in FIG. 5B). Single mode radio module 500 may only support one wireless communication medium at a time (e.g., a single mode radio module may be configured to support Bluetooth^{™}) and may share physical resources (e.g. physical layer 512) such as a common antenna 520 or an antenna array and associated hardware.

Since all of the single mode radio modules may share the resource of physical layer 512 as depicted in FIG. 5A, some sort of control must exist in order to control how each single mode radio module 500 uses these resources. Local controller 517 may therefore be included in each radio modem to control the usage of PHY layer 512. This local controller may take as inputs message information from other components within WCD 100 wishing to send messages via single mode radio module 500 and also information from other single mode radio modules 500 as to their current state. This current state information may include a priority level, an active/inactive state, a number of messages pending, a duration of active communication, etc. Local controller 517 may use this information to control the release of messages from message queue 518 to PHY layer 512, or further, to control the quality level of the messages sent from message queue 518 in order to conserve resources for other wireless communication mediums. The local control in each single mode radio module 500 may take the form of, for example, a schedule for utilization of a wireless communication medium implemented in the radio module.

An exemplary multimode radio module 510 is now explained in FIG. 5B. Multimode radio module 510 may include local control resources for managing each "radio" (e.g., software based radio control stacks) attempting to use the physical layer (PHY) resources of multimode radio module 510. In this example, multimode radio module 510 includes at least three radio stacks or radio protocols (labeled Bluetooth, WLAN and WiMAX in FIG. 5B) that may share the PHY layer resources (e.g., hardware resources, antenna, etc.) of multimode radio module 510. The local control resources may include an admission controller (Adm Ctrl 516) and a multimode controller (Multimode Manager 514). These local control resources may be embodied as a software program and/or in a hardware form (e.g., logic device, gate array, MCM, ASIC, etc.) in a dual-mode radio modem interface, and the radio modem interface may be coupled to, or alternatively, embedded in multimode radio module 510.

Admission control 516 may act as a gateway for the multimode radio module 510 by filtering out both different wireless communication medium requests from the operating system of WCD 100 that may be sent by multimode radio module 510 and that may further result in conflicts for multimode radio module 510. The conflict information may be sent along with operational schedule information for other radio modules to multimode manager 514 for further processing. The information received by multimode manager 514 may then be used to formulate a schedule, such as a schedule for utilization of wireless communication mediums, controlling the release of messages for transmission from the various message queues 518.

### V. Codec control.

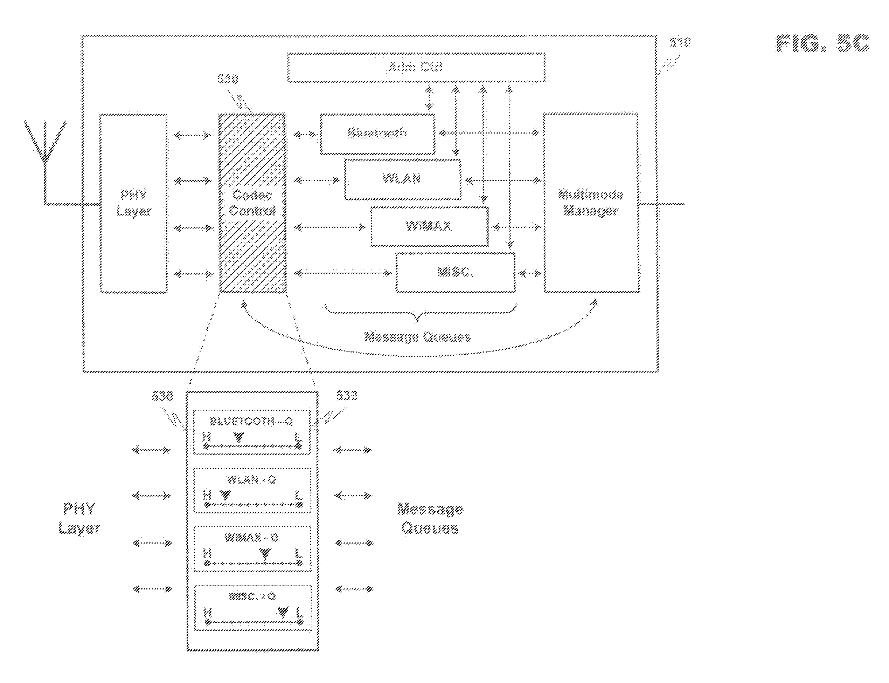

The previous example of a multimode radio module 510 is now used for the sake of explanation when discussing codec control. The present invention is not limited to this particular embodiment and may be implemented with either single mode radio modules 500 or multimode radio modules 510. FIG. 5C discloses a multimode radio module 510 including a codec controller 530 for coupling message queues 518 to PHY layer 512. Codec controller 530 may further be coupled to multimode manager 514. Multimode manager 514 may utilize this coupling in order to balance outgoing messages in view of various inputs both internal to multimode radio module 510 and supplied from elsewhere in WCD. Inputs that may be provided internally include a priority of wireless communication mediums, a number of messages pending in message radio queue 518, a duration of time utilizing PHY layer 512 for each message queue, etc. Inputs that may be received from outside of multimode radio modules 510 may include at least active/sleep mode indicators and predicted transmission schedules from other radio modules utilizing possibly conflicting wireless communication mediums.

The information received by multimode manager 514 may be used to control various codecs used in accordance with the wireless communication mediums supported by multimode radio module 510. These codecs may each be controlled individually, and are represented in FIG. 5C at 532. Signal quality level is represented by a sliding scale for each codec 532. "H" indicates that the codec is converting a signal so as to provide the highest quality available. As a result, this codec would also be using the maximum amount of resources. Conversely, "L" indicates that the codec is configured to convert the signal so that it makes the most efficient use of resources available in PHY layer 512, however, the quality will be low.

Each codec may be configured individually so as to balance the communication requirements of the various message queues 518 in view of the information received and processed by multimode manager 514. For example, WLAN may be the highest priority wireless communication medium for multimode radio module 510. This may be determined by at least one of a user configuration in WCD 100, an application using WLAN for wireless communication, the nature of how the specific communication medium functions (e.g., because WLAN is unscheduled), etc. WLAN is therefore set closer to "H" in order to ensure the best quality of communication. Due to WLAN using a large portion of the available resources for multimode radio module 510, the other codecs 532 may be set at a lower quality level to prevent the complete depletion and possible overloading of resources. In this example, Bluetooth^{™} may be second in priority operating at a slightly lower quality level, followed by WiMAX and any other wireless communication mediums (MISC.) serviced by multimode radio module 510.

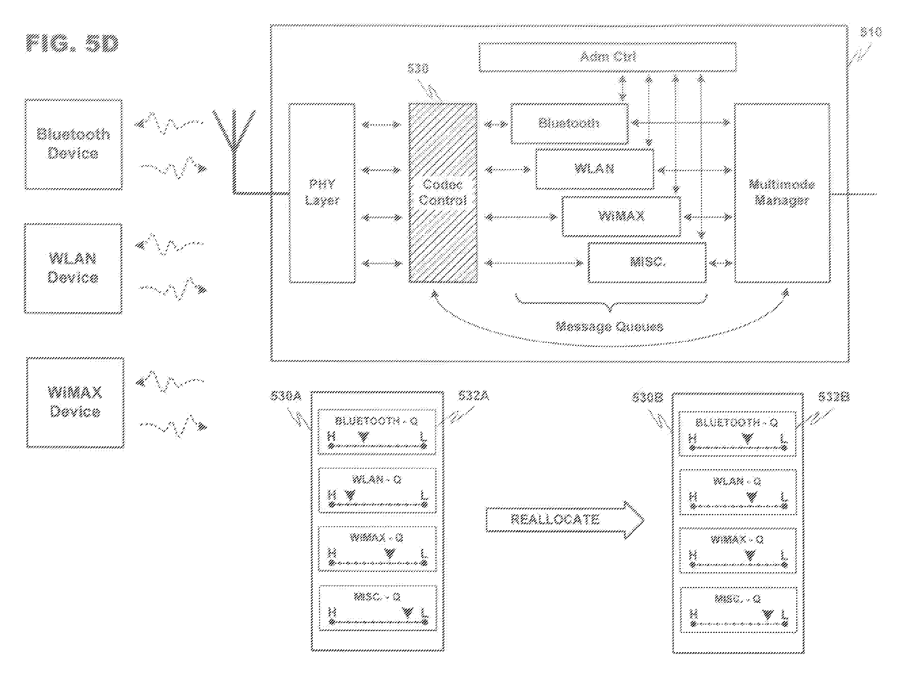

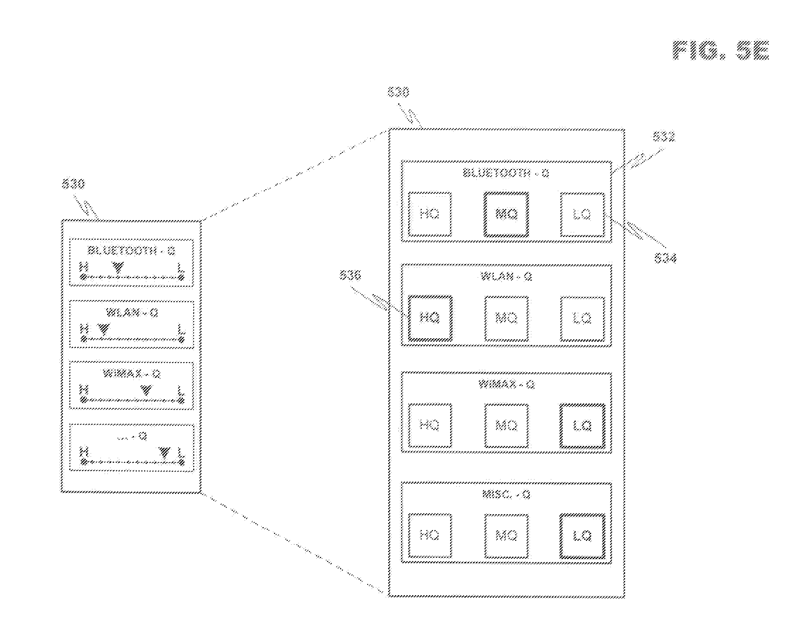

In another example of the present invention, FIG. 5D discloses a scenario wherein a pluarility of wireless devices are simultaneously communicating with WCD 100 over different wireless communication mediums. In order to sustain all of these concurrent wireless links and avoid a communication failure, the signal quality levels shown in 530A may be adjusted to reflect the signal quality levels in 530B. For example, Bluetooth^{™} signal quality may be reduced from a higher setting in 532A to a lower setting as shown in 532B. The communication resources made available by this change may be allocated to other radio modules 610 or other wireless communication mediums in the case of multimode radio module 510. In actual practice, this may involve WCD 100 instructing a connected Bluetooth device to adjust the codec to accommodate a lower signal quality, such as WCD 100 instructing a Bluetooth^{™} headset to adjust an audio codec it is using for transmitting and receiving voice communication. In some cases, this may involve the activation of a different codec, which is described further in FIG. 5E.

FIG. 5E expands on the example signal quality configuration presented in FIG. 5D. The translation of various quality levels into actual practice may involve the selection of a completely different codec to be used for converting a signal. For example, the codec controller 530 first represented in FIG. 5C is now represented again in FIG. 5E with various codecs 532 for each wireless communication medium serviced by multimode radio module 510. The codecs 532 may be further composed of specific bit rate codecs 532 that may be selected by multimode manager 514. "HQ" may indicate a high bit rate codec for creating a high quality signal. "LQ" may indicate a more resource-friendly low bit rate codec that also conveys lower quality. By selecting a codec for each wireless communication medium, communications over all wireless communication mediums may be maintained, though some may operate at a lower quality level.

### VI. Bitrate scaling

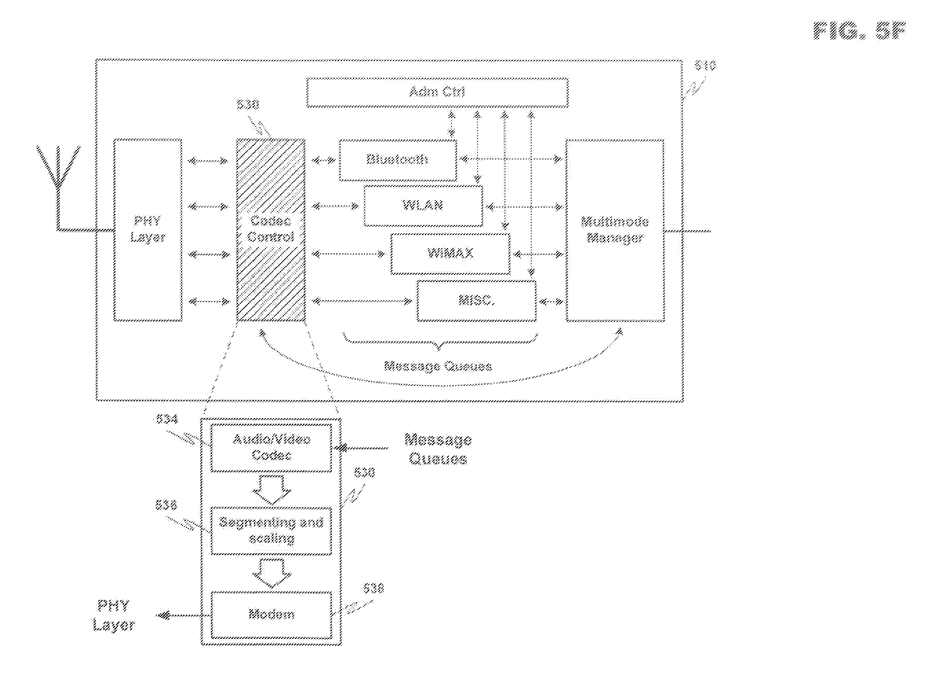

Adjusting the quality of a signal is not limited to directly altering a codec. Signal quality may also be adjusted after a codec has converted a signal in preparation for transmission. An exemplary post-codec signal quality adjustment system in accordance with at least one embodiment of the present invention is disclosed in FIG. 5F. As shown in this example, Codec control element 530 may further include a module for performing bitrate scaling on a signal for transmission. In this process, a packetized signal may be broken down further into smaller packets in segmenting and scaling section 536. Then, less critical packets may be eliminated resulting in a signal with a lower quality level but much higher resource economy. This signal may then be transferred through radio modem 538 out to the PHY layer 512 for transmission.

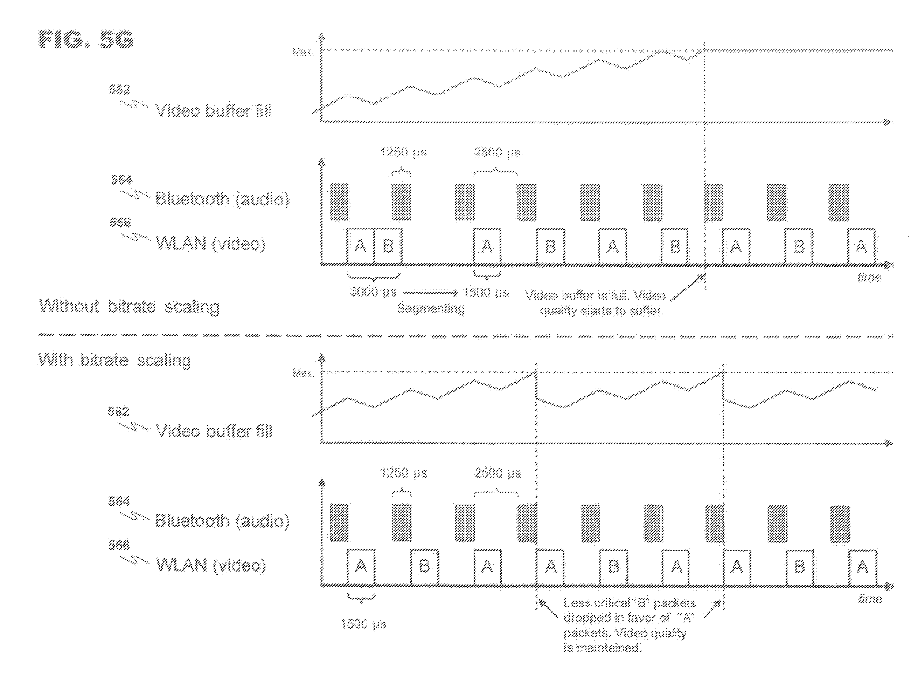

An example of wireless communication medium activity is disclosed in FIG. 5G. The system includes a Bluetooth^{™} radio module and its user application and a WLAN radio module with its user application. More specifically, Bluetooth^{™} 554 supports an application transmitting voice data, for example, from mobile terminal to headset. WLAN 556 supports a video codec (featuring bitrate scaling capacity) which may be streaming video data from the terminal's camera to a laptop. In this example, Bluetooth^{™} 554 may be considered higher priority than WLAN 556 because Bluetooth^{™} 554 cannot retransmit lost packets due to the packets being of type SCO HV3 [3]. Further, for Bluetooth^{™} 554 use in this scenario, the maximum and average allowance size is (ideally) 2500 µs and the bandwidth allowance is 66%.

Assuming that the required bandwidth for the full data streaming is 50% and the packet size from the codec is 3000 µs. This initial packet size has been represented as combined "A" and "B" segments, however, these packets may be further segmented into separate "A" and "B" packets each 1500 µs long (it is also possible to use smaller segments, but two segment parts are used here for the sake of explanation). These packets (and the WLAN protocol overhead) can be transmitted inside the allocation window (1500 µs + overhead < 2500 µs). If every "A" and "B" packet in data stream 556 is immediately and successfully transmitted, meaning that one packet is transmitted and acknowledged in each allocation window, WLAN would be capable of providing 40% bandwidth, which is below the 50% actually required. This shortfall may cause WLAN radio module transmission buffer 552 to overflow, which may result in the arbitrary loss or dropping of packets. Arbitrary packet loss may, for example, create image stuttering and/or blackouts in the WLAN video feed, and may possibly lead to total loss of the video feed.

However, with the implementation of bitrate scaling, segmenting and scaling element 534 is able to segment input packets from WLAN signal 566 into smaller tagged packets. These segments may be stored into a buffer 562. Link quality parameters may then be selected to ensure uninterrupted transmission of Bluetooth^{™} signal 564. These parameters may be determined, for example, by multimode manager 514. Scaling element 534 may then act in accordance with these parameters and discard some of the segmented packets in order to bring the signal quality and resource usage to a desired level. Since each WLAN packet 566 may be divided into "A" and "B" packets, and the codec supports bitrate scaling, the segmenting and scaling element may be instructed to discard "B" packets when necessary since they are not vital to the stream. This is shown in FIG. 5G, for example, at 566 where some "B" packets are dropped, which results in the buffer level 562 dropping and never actually reaching overflow. This may result in lower signal quality, which may cause some pixilation and the occasional blurring of image. However this controlled quality drop may reduce the overall resource burden, allowing WCD 100 to avoid a fatal WLAN data loss that would cripple the viewing experience.

### VII. A wireless communication device including a multiradio controller.

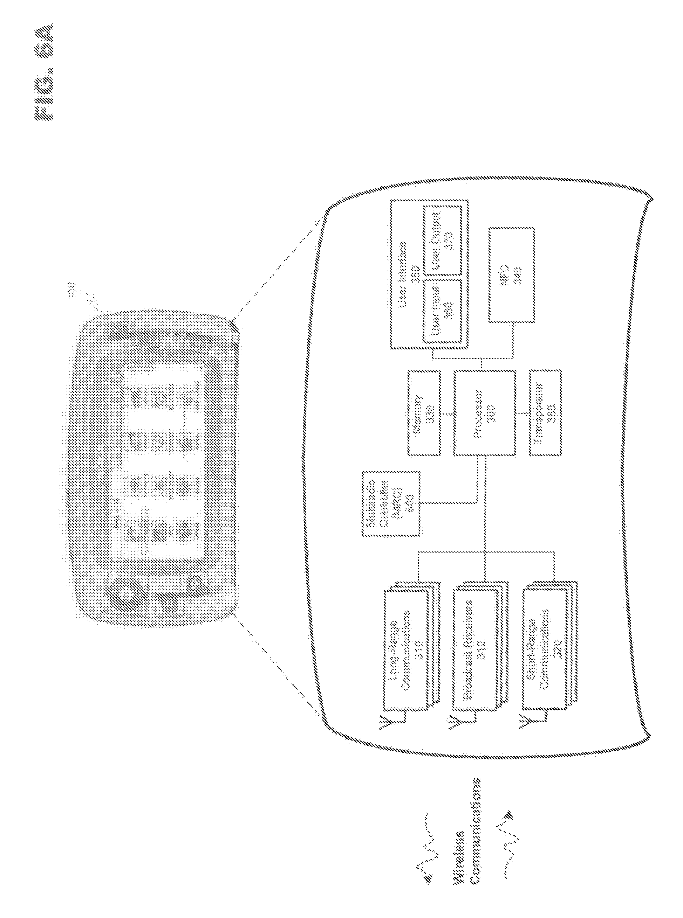

In an attempt to better manage communication in WCD 100, an additional controller dedicated to managing wireless communication may be introduced. WCD 100, as pictured in FIG. 6A, includes a multiradio controller (MRC) 600 in accordance with at least one embodiment of the present invention. MRC 600 is coupled to the master control system of WCD 100. This coupling enables MRC 600 to communicate with radio modems or other similar devices in communications modules 310 312, 320 and 340 via the master operating system of WCD 100.

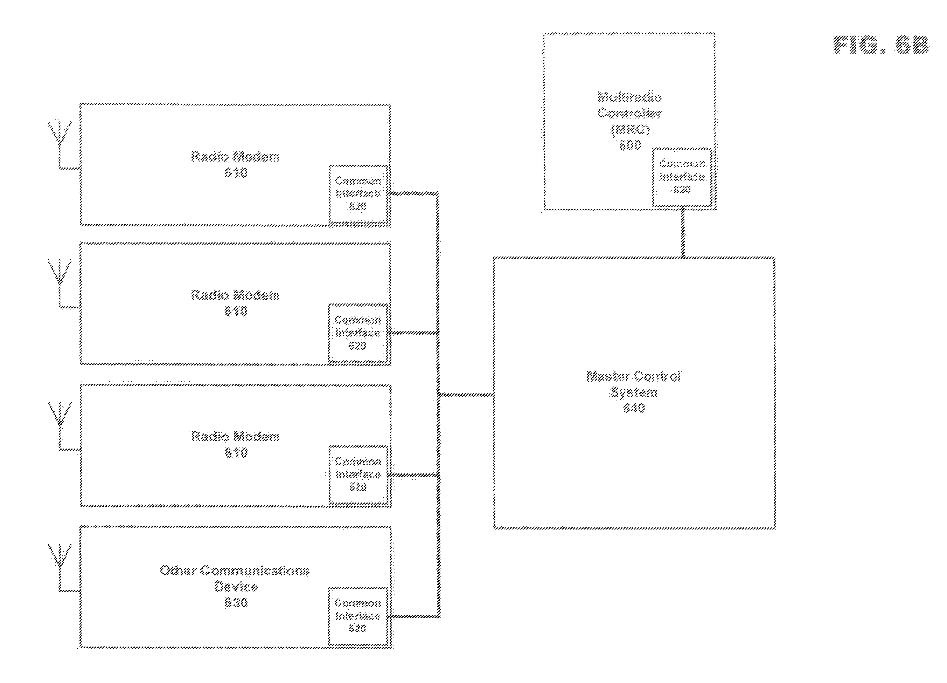

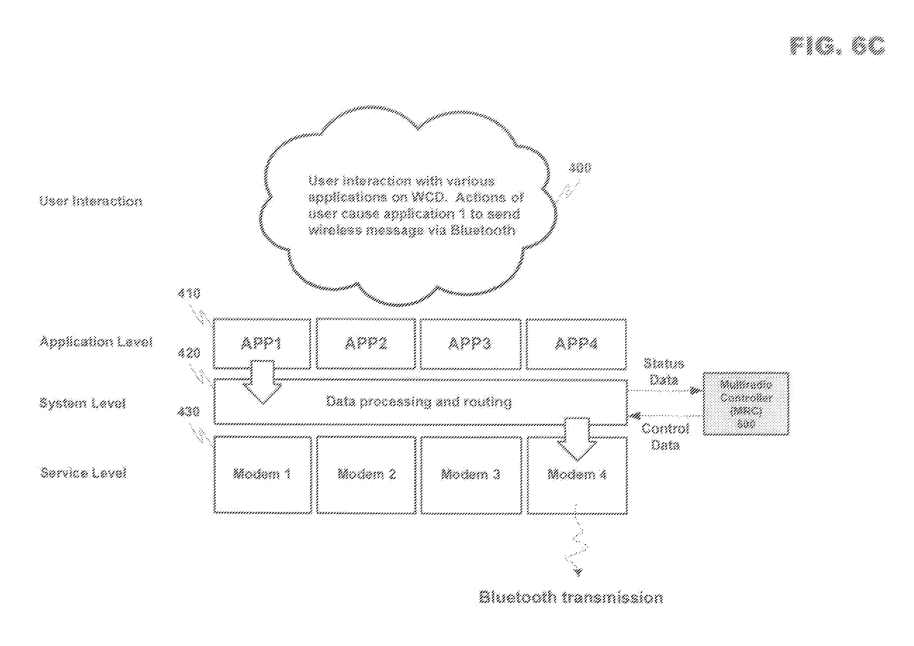

FIG. 6B discloses in detail at least one embodiment of WCD 100, which may include multiradio controller (MRC) 600 introduced in FIG. 6A in accordance with at least one embodiment of the present invention. MRC 600 includes common interface 620 by which information may be sent or received through master control system 640. Radio modems 610 and other devices 630 may also be referred to as "modules" in this disclosure as they may contain supporting hardware and/or software resources in addition to the modem itself. These resources may include control, interface and/or processing resources. For example, each radio modem 610 or similar communication device 630 (e.g., an RFID scanner for scanning machine-readable information) may also include some sort of common interface 620 for communicating with master control system 640. As a result, all information, commands, etc. occurring between radio modems 610, similar devices 630 and MRC 600 are conveyed by the communication resources of master control system 640. The possible effect of sharing communication resources with all the other functional modules within WCD 100 will be discussed with respect to FIG. 6C.

FIG. 6C discloses an operational diagram similar to FIG. 4 including the effect of MRC 600 in accordance with at least one embodiment of the present invention. In this system MRC 600 may receive operational data from the master operating system of WCD 100, concerning for example applications running in application level 410, and status data from the various radio communication devices in service level 430. MRC 600 may use this information to issue scheduling commands to the communication devices in service level 430 in an attempt to avoid communication problems. However, problems may occur when the operations of WCD 100 are fully employed. Since the various applications in application level 410, the operating system in system level 420, the communication devices in service level 430 and MRC 600 must all share the same communication system, delays may occur when all aspects of WCD 100 are trying to communicate on the common interface system 620. As a result, delay sensitive information regarding both communication resource status information and radio modem 610 control information may become delayed, nullifying any beneficial effect from MRC 600. Therefore, a system better able to handle the differentiation and routing of delay sensitive information is required if the beneficial effect of MRC 600 is to be realized.

### VIII. A wireless communication device including a multiradio control system.

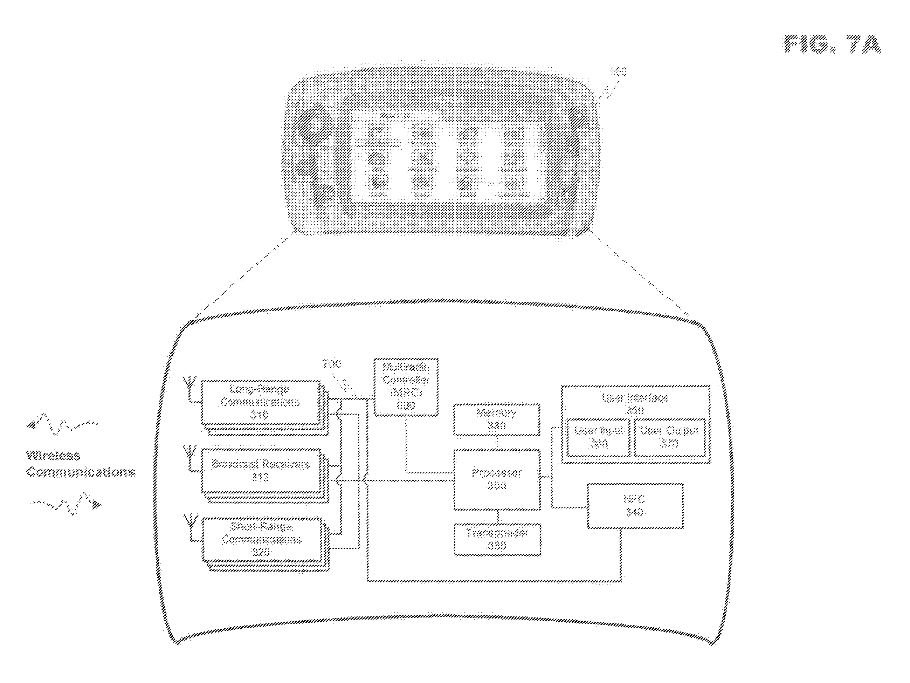

FIG. 7A introduces MRC 600 as part of a multiradio control system (MCS) 700 in WCD 100 in accordance with at least one embodiment of the present invention. MCS 700 directly links the communication resources of modules 310, 312, 320 and 340 to MRC 600.
MCS 700 may provide a dedicated low-traffic communication structure for carrying delay sensitive information both to and from MRC 600.

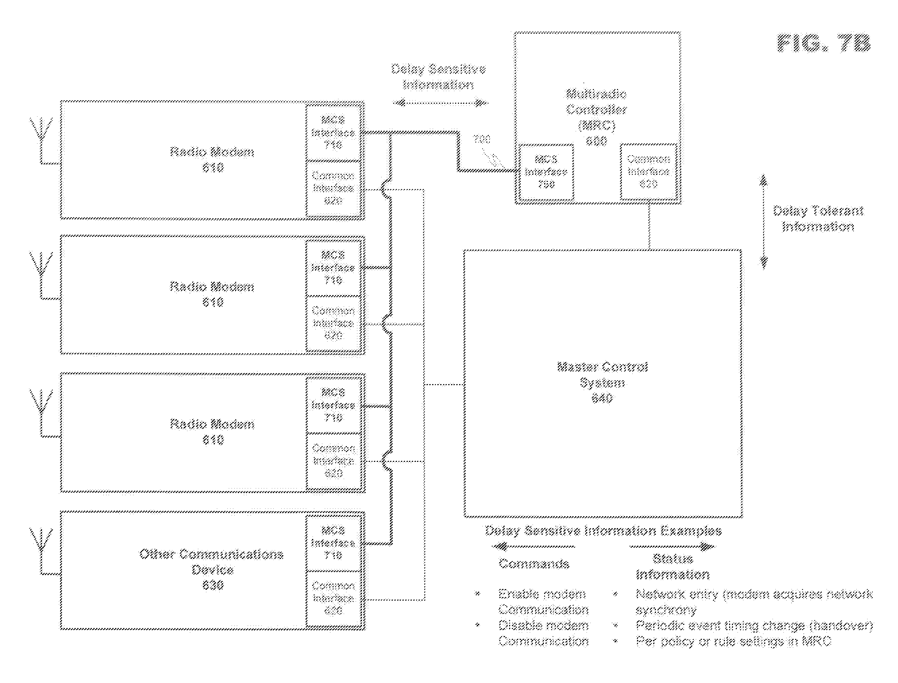

Additional detail is shown in FIG. 7B. MCS 700 forms a direct link between MRC 600 and the communication resources of WCD 100. This link may be established by a system of dedicated MCS interfaces 710 and 760. For example, MCS interface 760 may be coupled to MRC 600. MCS Interfaces 710 may connect radio modems 610 and other similar communication devices 630 to MCS 700 in order to form an information conveyance for allowing delay sensitive information to travel to and from MRC 600. In this way, the abilities of MRC 600 are no longer influenced by the processing load of master control system 640. As a result, any information still communicated by master control system 640 to and from MRC 600 may be deemed delay tolerant, and therefore, the actual arrival time of this information does not substantially influence system performance. On the other hand, all delay sensitive information is directed to MCS 700, and therefore is insulated from the loading of the master control system.

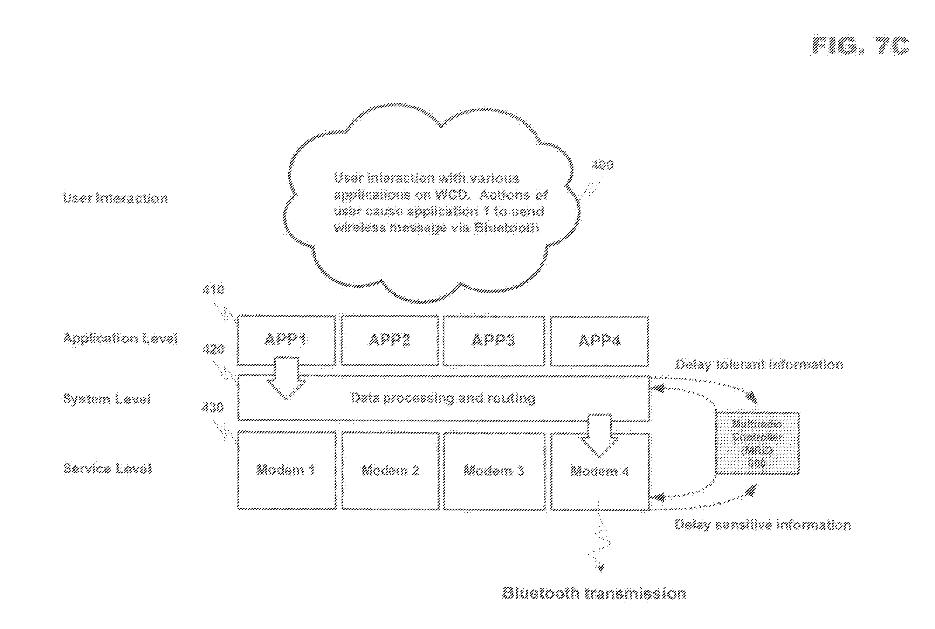

The effect of MCS 700 is seen in FIG. 7C in accordance with at least one embodiment of the present invention. Information may now be received in MRC 600 from at least two sources. System level 420 may continue to provide information to MRC 600 through master control system 640. In addition, service level 430 may specifically provide delay sensitive information conveyed by MCS 700. MRC 600 may distinguish between these two classes of information and act accordingly. Delay tolerant information may include information that typically does not change when a radio modem is actively engaged in communication, such as radio mode information (e.g., GPRS, Bluetooth^{™}, WLAN, etc.), priority information that may be defined by user settings, the specific service the radio is driving (QoS, real time/non real time), etc. Since delay tolerant information changes infrequently, it may be delivered in due course by master control system 640 of WCD 100. Alternatively, delay sensitive (or time sensitive) information includes at least modem operational information that frequently changes during the course of a wireless connection, and therefore, requires immediate update. As a result, delay sensitive information may need to be delivered directly from the plurality of radio modems 610 through the MCS interfaces 710 and 760 to MRC 600, and may include radio modem synchronization information. Delay sensitive information may be provided in response to a request by MRC 600, or may be delivered as a result of a change in radio modem settings during transmission, as will be discussed with respect to synchronization below.

### IX. A wireless communication device including a distributed multiradio control system.

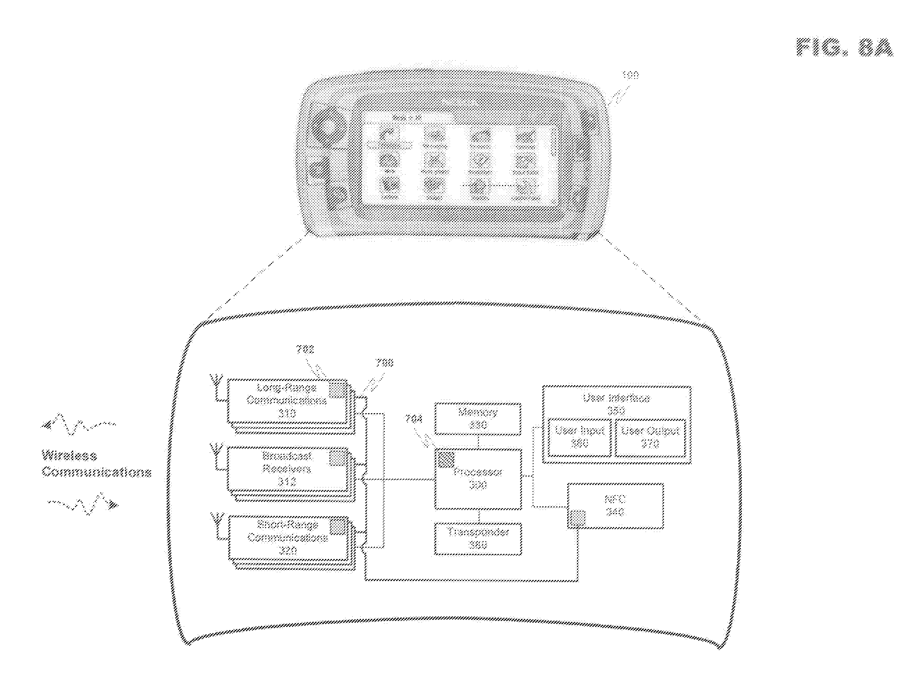

FIG. 8A discloses an alternative configuration in accordance with at least one embodiment of the present invention, wherein a distributed multiradio control system (MCS) 700 is introduced into WCD 100. Distributed MCS 700 may, in some cases, be deemed to provide an advantage over a centralized MRC 600 by distributing these control features into already necessary components within WCD 100. As a result, a substantial amount of the communication management operations may be localized to the various communication resources, such as radio modems (modules) 610, reducing the overall amount of control command traffic in WCD 100.

MCS 700, in this example, may be implemented utilizing a variety of bus structures, including the I²C interface commonly found in portable electronic devices, as well as emerging standards such as SLIMbus that are now under development. I²C is a multi-master bus, wherein multiple devices can be connected to the same bus and each one can act as a master through initiating a data transfer. An I²C bus contains at least two communication lines, an information line and a clock line. When a device has information to transmit, it assumes a master role and transmits both its clock signal and information to a recipient device. SLIMbus, on the other hand, utilizes a separate, non-differential physical layer that runs at rates of 50 Mbits/s or slower over just one lane. It is being developed by the Mobile Industry Processor Interface (MIPI) Alliance to replace today's I²C and I²S interfaces while offering more features and requiring the same or less power than the two combined.

MCS 700 directly links distributed control components 702 in modules 310, 312, 320 and 340. Another distributed control component 704 may reside in master control system 640 of WCD 100. It is important to note that distributed control component 704 shown in processor 300 is not limited only to this embodiment, and may reside in any appropriate system module within WCD 100. The addition of MCS 700 provides a dedicated low-traffic communication structure for carrying delay sensitive information both to and from the various distributed control components 702.

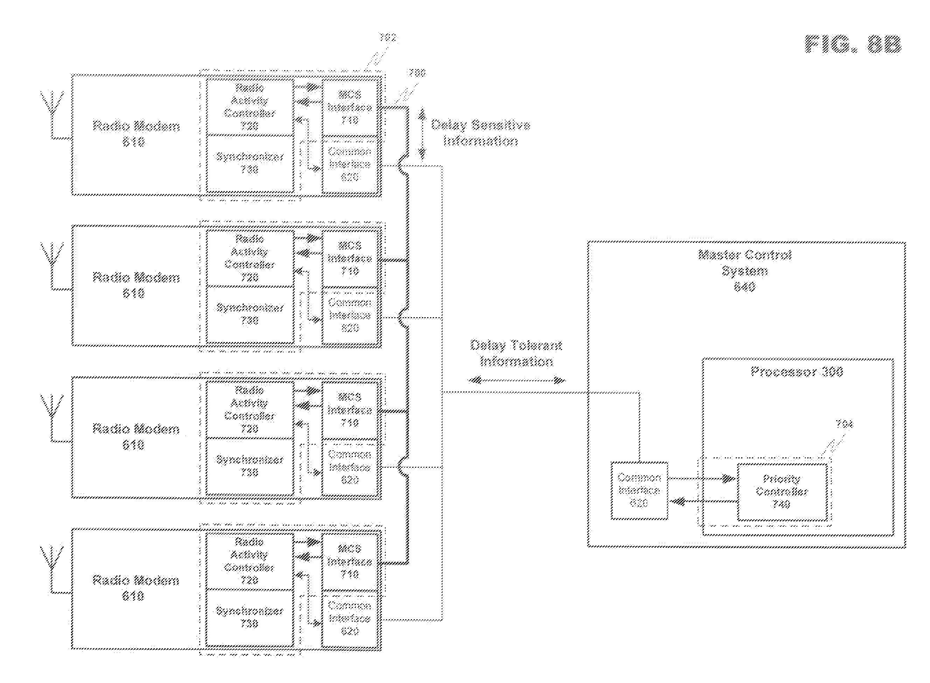

The exemplary embodiment disclosed in FIG. 8A is described with more detail in FIG. 8B. MCS 700 forms a direct link between distributed control components 702 within WCD 100. Distributed control components 702 in radio modems 610 (together forming a "module") may, for example, consist of MCS interface 710, radio activity controller 720 and synchronizer 730. Radio activity controller 720 uses MCS interface 710 to communicate with distributed control components in other radio modems 610. Synchronizer 730 may be utilized to obtain timing information from radio modem 610 to satisfy synchronization requests from any of the distributed control components 702. Radio activity controller 702 may also obtain information from master control system 640 (e.g., from distributed control component 704) through common interface 620. As a result, any information communicated by master control system 640 to radio activity controller 720 through common interface 620 may be deemed delay tolerant, and therefore, the actual arrival time of this information does not substantially influence communication system performance. On the other hand, all delay sensitive information may be conveyed by MCS 700, and therefore is insulated from master control system overloading.

As previously stated, a distributed control component 704 may exist within master control system 640. Some aspects of this component may reside in processor 300 as, for example, a running software routine that monitors and coordinates the behavior of radio activity controllers 720. Processor 300 is shown to contain priority controller 740. Priority controller 740 may be utilized to monitor active radio modems 610 in order to determine priority amongst these devices. Priority may be determined by rules and/or conditions stored in priority controller 740. Modems that become active may request priority information from priority controller 740. Further, modems that go inactive may notify priority controller 740 so that the relative priority of the remaining active radio modems 610 may be adjusted accordingly. Priority information is usually not considered delay sensitive because it is mainly updated when radio modems 610 activate/deactivate, and therefore, does not frequently change during the course of an active communication connection in radio modems 610. As a result, this information may be conveyed to radio modems 610 using common interface system 620 in at least one embodiment of the present invention.

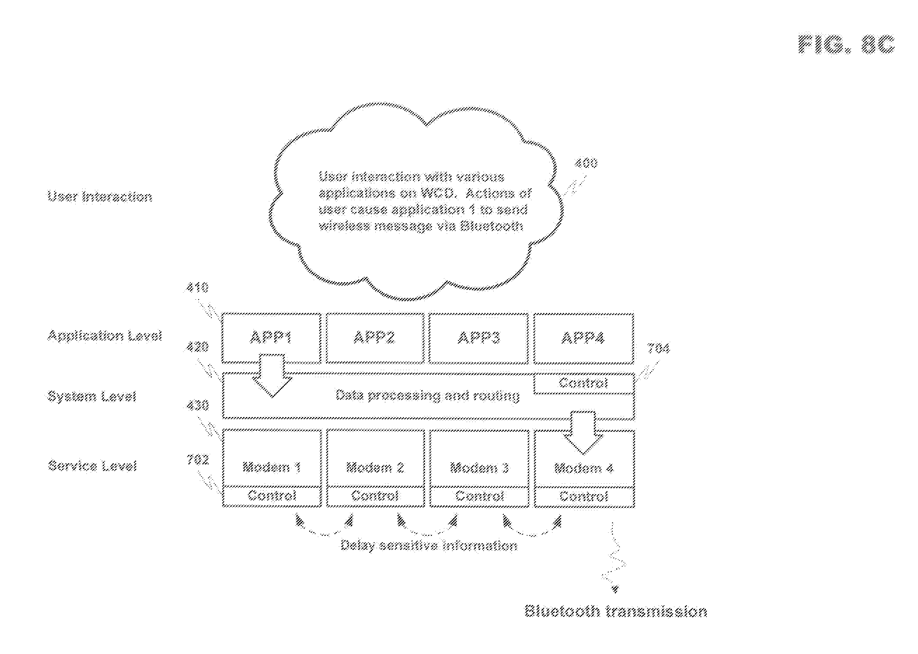

At least one effect of a distributed control MCS 700 is seen in FIG. 8C. System level 420 may continue to provide delay tolerant information to distributed control components 702 through master control system 640. In addition, distributed control components 702 in service level 430, such as modem activity controllers 720, may exchange delay sensitive information with each other via MCS 700. Each distributed control component 702 may distinguish between these two classes of information and act accordingly. Delay tolerant information may include information that typically does not change when a radio modem is actively engaged in communication, such as radio mode information (e.g., GPRS, Bluetooth^{™}, WLAN, etc.), priority information that may be defined by user settings, the specific service the radio is driving (QoS, real time/non real time), etc. Since delay tolerant information changes infrequently, it may be delivered in due course by master control system 640 of WCD 100. Alternatively, delay sensitive (or time sensitive) information may include at least modem operational information that frequently changes during the course of a wireless connection, and therefore, requires immediate update. Delay sensitive information needs to be delivered directly between distributed control components 702, and may include radio modem synchronization and activity control information. Delay sensitive information may be provided in response to a request, or may be delivered as a result of a change in radio modem, which will be discussed with respect to synchronization below.

MCS interface 710 may be used to (1) Exchange synchronization information, and (2) Transmit identification or prioritization information between various radio activity controllers 720. In addition, as previously stated, MCS interface 710 is used to communicate the radio parameters that are delay sensitive from a controlling point of view. MCS interface 710 can be shared between different radio modems (multipoint) but it cannot be shared with any other functionality that could limit the usage of MCS interface 710 from a latency point of view.

The control signals sent on MCS 700 that may enable/disable a radio modem 610 should be built on a modem's periodic events. Each radio activity controller 720 may obtain this information about a radio modem's periodic events from synchronizer 730. This kind of event can be, for example, frame clock event in GSM (4.615 ms), slot clock event in Bluetooth^{TM} (625 us) or targeted beacon transmission time in WLAN (100 ms) or any multiple of these. A radio modem 610 may send its synchronization indications when (1) Any radio activity controller 720 requests it, (2) a radio modem internal time reference is changed (e.g. due to handover or handoff). The latency requirement for the synchronization signal is not critical as long as the delay is constant within a few microseconds. The fixed delays can be taken into account in the scheduling logic of radio activity controller 710.

For predictive wireless communication mediums, the radio modem activity control may be based on the knowledge of when the active radio modems 610 are about to transmit (or receive) in the specific connection mode in which the radios are currently operating. The connection mode of each radio modem 610 may be mapped to the time domain operation in their respective radio activity controller 720. As an example, for a GSM speech connection, priority controller 740 may have knowledge about all traffic patterns of GSM. This information may be transferred to the appropriate radio activity controller 720 when radio modem 610 becomes active, which may then recognize that the speech connection in GSM includes one transmission slot of length 577 µs, followed by an empty slot after which is the reception slot of 577 µs, two empty slots, monitoring (RX on), two empty slots, and then it repeats. Dual transfer mode means two transmission slots, empty slot, reception slot, empty slot, monitoring and two empty slots. When all traffic patterns that are known a priori by the radio activity controller 720, it only needs to know when the transmission slot occurs in time to gain knowledge of when the GSM radio modem is active. This information may be obtained by synchronizer 730. When the active radio modem 610 is about to transmit (or receive) it must check every time whether the modem activity control signal from its respective radio activity controller 720 permits the communication. Radio activity controller 720 is always either allowing or disabling the transmission of one full radio transmission block (e.g. GSM slot).

### X. A wireless communication device including an alternative example of a distributed multiradio control system.

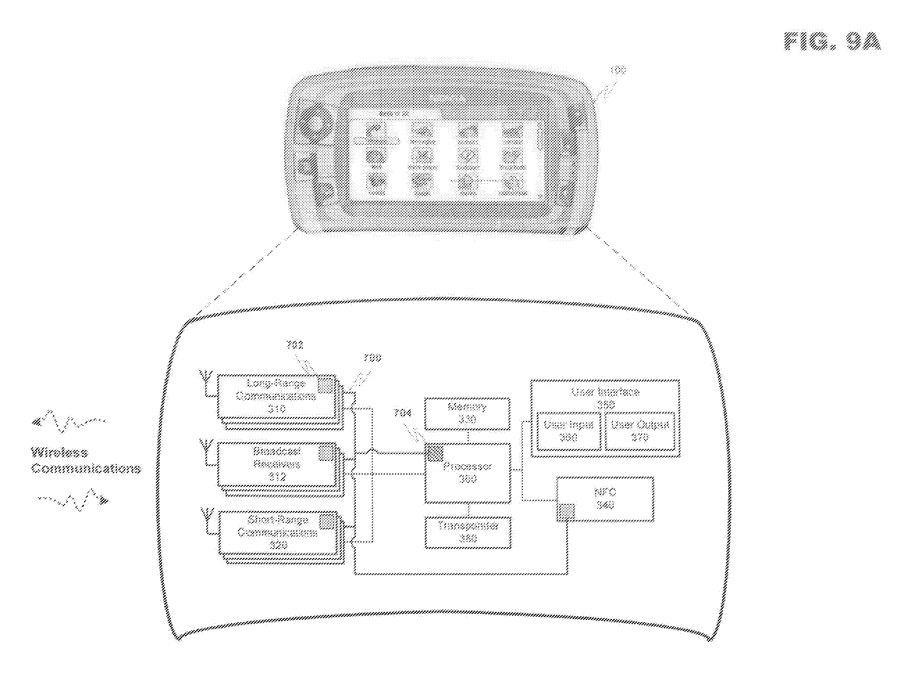

An alternative distributed control configuration in accordance with at least one embodiment of the present invention is disclosed in FIG. 9A-9C. In FIG. 9A, distributed control components 702 continue to be linked by MCS 700. However, now distributed control component 704 is also directly coupled to distributed control components 702 via an MCS interface. As a result, distributed control component 704 may also utilize and benefit from MCS 700 for transactions involving the various communication components of WCD 100.

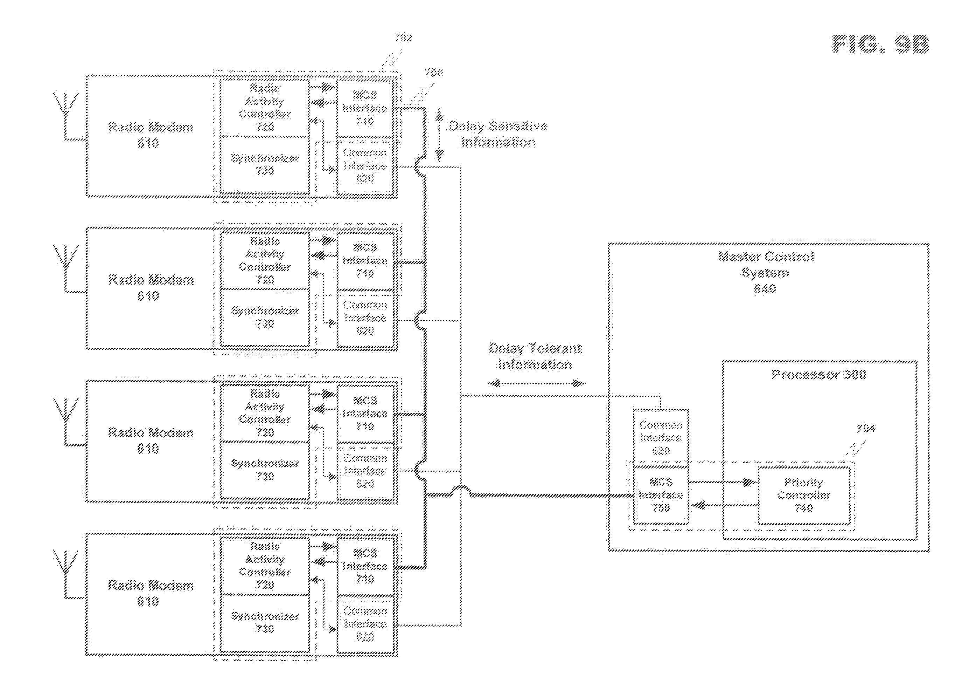

Referring now to FIG. 9B, the inclusion of distributed control component 704 onto MCS 700 is shown in more detail. Distributed control component 704 includes at least priority controller 740 coupled to MCS interface 750. MCS interface 750 allows priority controller 740 to send information to, and receive information from, radio activity controllers 720 via a low-traffic connection dedicated to the coordination of communication resources in WCD 100. As previously stated, the information provided by priority controller 740 may not be deemed delay sensitive information, however, the provision of priority information to radio activity controllers 720 via MCS 700 may improve the overall communication efficiency of WCD 100. Performance may improve because quicker communication between distributed control components 702 and 704 may result in faster relative priority resolution in radio activity controllers 720. Further, the common interface system 620 of WCD 100 will be relieved of having to accommodate communication traffic from distributed control component 704, reducing the overall communication load in master control system 640. Another benefit may be realized in communication control flexibility in WCD 100. New features may be introduced into priority controller 740 without worrying about whether the messaging between control components will be delay tolerant or sensitive because an MCS interface 710 is already available at this location.

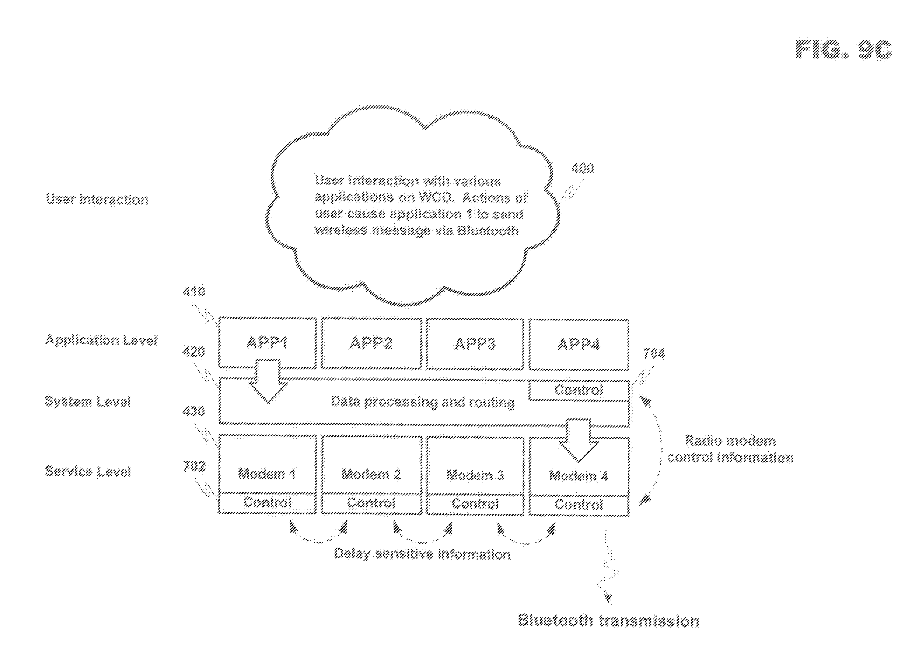

FIG. 9C discloses the operational effect of the enhancements seen in the current alternative embodiment of the present invention on communication in WCD 100. The addition of an alternative route for radio modem control information to flow between distributed control components 702 and 704 may both improve the communication management of radio activity controllers 720 and lessen the burden on master control system 640. In this embodiment, all distributed control components of MCS 700 are linked by a dedicated control interface, which provides immunity to communication coordination control messaging in WCD 100 when the master control system 640 is experiencing elevated transactional demands.

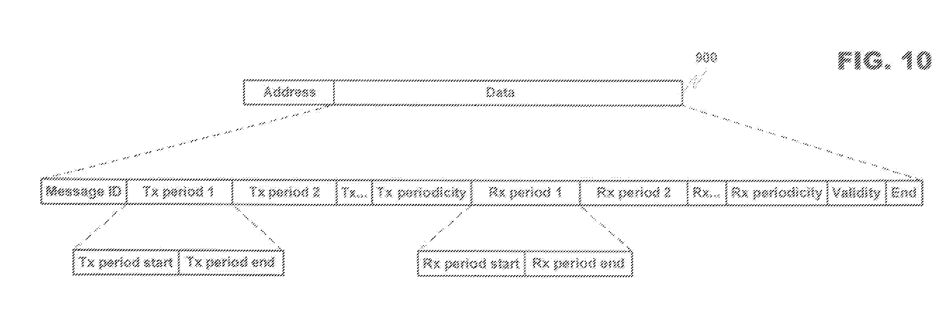

An example message packet 900 is disclosed in FIG. 10 in accordance with at least one embodiment of the present invention. Example message packet 900 includes activity pattern information that may be formulated by MRC 600 or radio activity controller 720. The data payload of packet 900 may include, in at least one embodiment of the present invention, at least Message ID information, allowed/disallowed transmission (Tx) period information, allowed/disallowed reception (Rx) period information, Tx/Rx periodicity (how often the Tx/Rx activities contained in the period information occur), and validity information describing when the activity pattern becomes valid and whether the new activity pattern is replacing or added to the existing one. The data payload of packet 900, as shown, may consist of multiple allowed/disallowed periods for transmission or reception (e.g., Tx period 1, 2...) each containing at least a period start time and a period end time during which radio modem 610 may either be permitted or prevented from executing a communication activity. While the distributed example of MCS 700 may allow radio modem control activity to be controlled real-time (e.g., more control messages with finer granularity), the ability to include multiple allowed/disallowed periods into a single message packet 900 may support radio activity controllers 720 in scheduling radio modem behavior for longer periods of time, which may result in a reduction in message traffic. Further, changes in radio modem 610 activity patterns may be amended using the validity information in each message packet 900.

The modem activity control signal (e.g., packet 900) may be formulated by MRC 600 or radio activity controller 720 and transmitted on MCS 700. The signal includes activity periods for Tx and Rx separately, and the periodicity of the activity for the radio modem 610. While the native radio modem clock is the controlling time domain (never overwritten), the time reference utilized in synchronizing the activity periods to current radio modem operation may be based on one of at least two standards. In a first example, a transmission period may start after a pre-defined amount of synchronization events have occurred in radio modem 610. Alternatively, all timing for MRC 600 or between distributed control components 702 may be standardized around the system clock for WCD 100. Advantages and disadvantages exist for both solutions. Using a defined number of modem synchronization events is beneficial because then all timing is closely aligned with the radio modem clock. However, this strategy may be more complicated to implement than basing timing on the system clock. On the other hand, while timing based on the system clock may be easier to implement as a standard, conversion to modem clock timing must necessarily be implemented whenever a new activity pattern is installed in radio modem 610.

The activity period may be indicated as start and stop times. If there is only one active connection, or if there is no need to schedule the active connections, the modem activity control signal may be set always on allowing the radio modems to operate without restriction. The radio modem 610 should check whether the transmission or reception is allowed before attempting actual communication. The activity end time can be used to check the synchronization. Once the radio modem 610 has ended the transaction (slot/packet/burst), it can check whether the activity signal is still set (it should be due to margins). If this is not the case, the radio modem 610 can initiate a new synchronization with MRC 600 or with radio activity controller 720 through synchronizer 730. The same happens if a radio modem time reference or connection mode changes. A problem may occur if radio activity controller 720 runs out of the modem synchronization and starts to apply modem transmission/reception restrictions at the wrong time. Due to this, modem synchronization signals need to be updated periodically. The more active wireless connections, the more accuracy is required in synchronization information.

### XI. Radio modem interface to other devices.

As a part of information acquisition services, the MCS interface 710 needs to send information to MRC 600 (or radio activity controllers 720) about periodic events of the radio modems 610. Using its MCS interface 710, the radio modem 610 may indicate a time instance of a periodic event related to its operation. In practice these instances are times when radio modem 610 is active and may be preparing to communicate or communicating. Events occurring prior to or during a transmission or reception mode may be used as a time reference (e.g., in case of GSM, the frame edge may be indicated in a modem that is not necessarily transmitting or receiving at that moment, but we know based on the frame clock that the modem is going to transmit [x]ms after the frame clock edge). Basic principle for such timing indications is that the event is periodic in nature. Every incident needs not to be indicated, but the MRC 600 may calculate intermediate incidents itself. In order for that to be possible, the controller would also require other relevant information about the event, e.g. periodicity and duration. This information may be either embedded in the indication or the controller may get it by other means. Most importantly, these timing indications need to be such that the controller can acquire a radio modem's basic periodicity and timing. The timing of an event may either be in the indication itself, or it may be implicitly defined from the indication information by MRC 600 (or radio activity controller 720).

In general terms these timing indications need to be provided on periodic events like: schedule broadcasts from a base station (typically TDMA/MAC frame boundaries) and own periodic transmission or reception periods (typically Tx/Rx slots). Those notifications need to be issued by the radio modem 610: (1) on network entry (i.e. modem acquires network synchrony), (2) on periodic event timing change e.g. due to a handoff or handover and (3) as per the policy and configuration settings in the multiradio controller (monolithic or distributed).
In at least one embodiment of the present invention, the various messages exchanged between the aforementioned communication components in WCD 100 may be used to dictate behavior on both a local (radio modem level) and global (WCD level) basis. MRC 600 or radio activity controller 720 may deliver a schedule to radio modem 610 with the intent of controlling that specific modem, however, radio modem 610 may not be compelled to conform to this schedule. The basic principle is that radio modem 610 is not only operating according to multiradio control information (e.g., operates only when MRC 600 allows) but is also performing internal scheduling and link adaptation while taking MRC scheduling information into account.

### XII. Integrating WCD control to supplement codec control strategy.

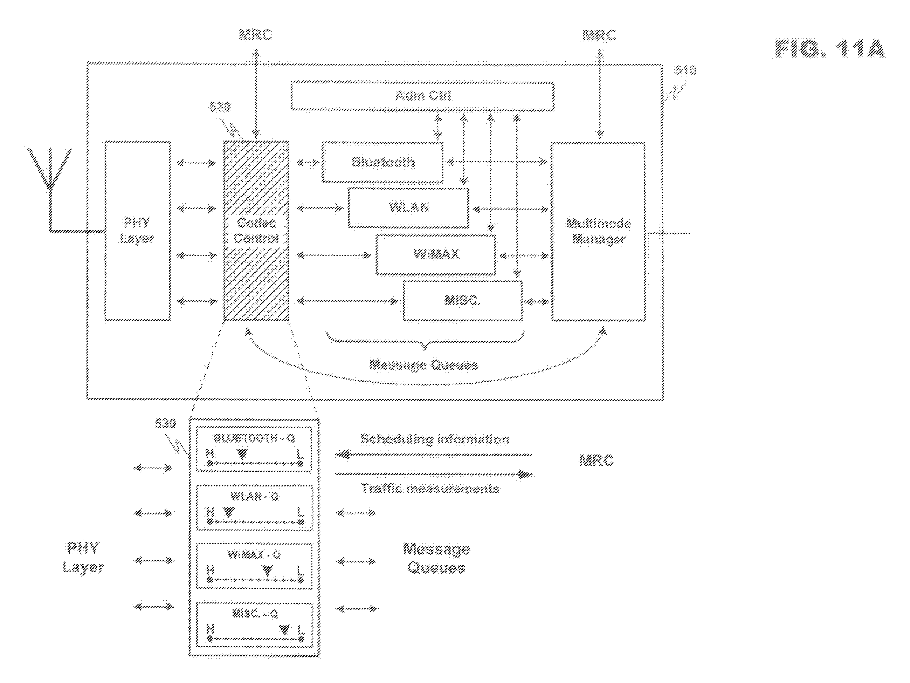

FIG. 11A shows an example of codec control implemented with communication management provided by MRC 600. In accordance with at least one embodiment of the present invention, MRC 600 may be coupled to one or both of codec control 530 or multimode manager 514. This coupling may be through either common interface 620 or MCS interface 710 dedicated to delivering delay sensitive information. Multimode radio module 510 may provide traffic measurement information to MRC 600. Traffic information may include the number of messages pending for each wireless communication medium, the age of the messages pending for each wireless communication medium, carrier sensing information regarding whether a channel is currently in use, etc. This information may be utilized by MRC 600 to create an operation schedule for each of the message queues 518 (and hence wireless communication mediums) supported by multimode radio module 510.

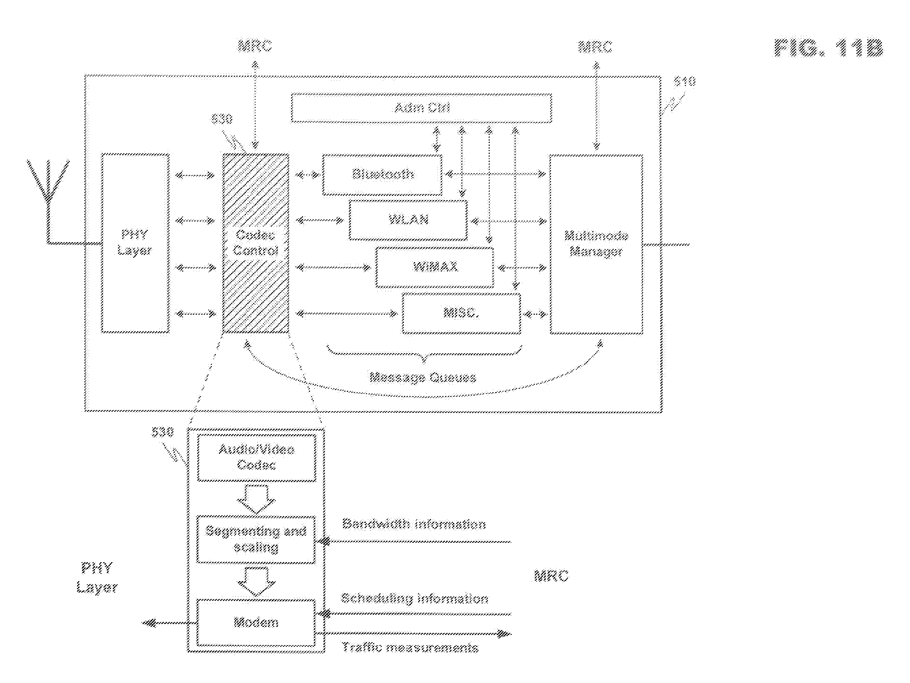

Now referring to FIG. 11B, an exemplary integration of the bitrate scaling codec control 530 and MRC control 600 is now shown. As previously disclosed above, this coupling may be through either common interface 620 or MCS interface 710 dedicated to delivering delay sensitive information. Multimode radio module 510 may provide traffic measurement information to MRC 600. The schedule information provided by MRC 600 may include statistical and/or accurate data on the packet sizes that can be sent over the link and the overall air-time allowance to the link. The schedule information may then be used to segment the output data from the codec so that all transmitted packets fit the maximum packet size. The overall air-time allowance can further be translated to link capacity. If the link capacity is below the total requirement of the data stream provided by the codec, a buffer overflow may be prevented by selecting those packets which are not critical to the stream and discarding them. In this way, the quality of the signal may be reduced, but so will the total requirement for transmitting the signal.

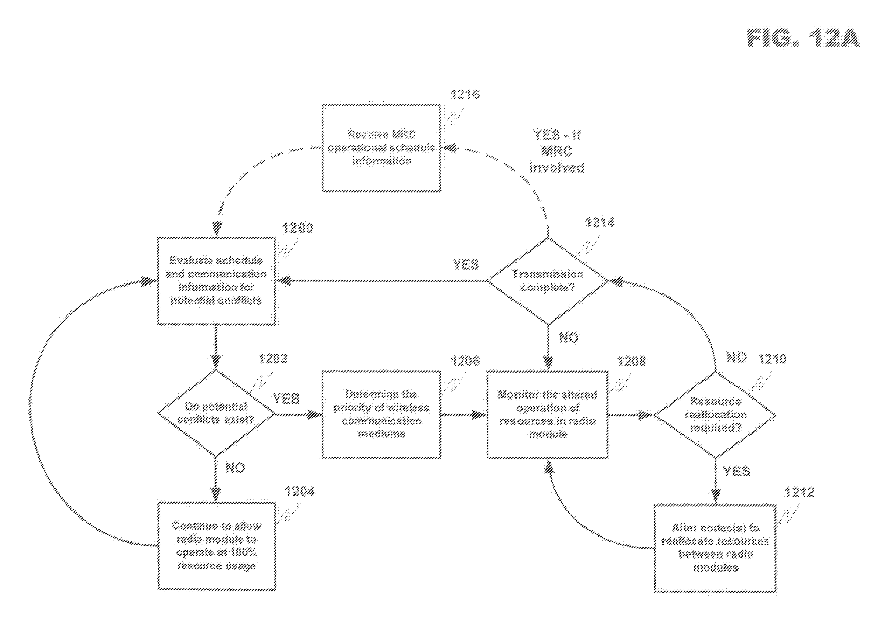

FIG. 12A discloses an exemplary process flow in accordance with at least one embodiment of the present invention. More specifically, the process disclosed may be used to determine if the quality of signal being transmitted by a radio module 610 should be adjusted. The process may begin at step 1200 wherein communication is evaluated for potential conflicts. If MRC 600 is managing communication for WCD 100, then the schedule information may be provided by MRC 600 in step 1216. Otherwise schedule information may be communicated between local controllers located in each radio module 610. Status information may also be shared by these local controllers, or radio modem status information may be obtained through the monitoring of message queues 618 in other radio module (e.g., single mode radio modem 500) or also in the same radio module 610 (e.g., multimode radio modem 510). If after processing the received schedule and status information no potential conflicts appear to exist, then in step 1204 radio module 610 may continue to allow 100% of the communication resources to be allocated to the active wireless communication mediums in step 1204. The process may then begin again in step 1200 on a periodic basis or in accordance with some trigger to reevaluate potential conflicts.

However, if potential conflicts are determined in step 1202, then in step 1206 a relative priority between active wireless communication mediums may be determined. As previously stated, this relative priority may be determined in view of a multitude of factors such as the state of the message queue supporting a wireless communication medium, an application utilizing a wireless communication medium, a user setting, etc. Once the priority is determined, then in step 1208 a continuous adjustment process may commence, wherein the different active radio modules 610 (or active message queues in the case of a multimode radio module 510) may be monitored in order to determine if resources need to be reallocated. For example, if a higher priority wireless communication medium requires additional resources (e.g., needs more time allocated to transmit packets through antenna 520 via PHY layer 512), then a decision may be made in step 1210 to reallocate more communication resources to the higher priority medium. In another scenario, the quality of a higher priority wireless communication medium may be reduced in order to stabilize communication for other radio modules 610 in WCD 100. This may include altering a codec for another wireless communication medium in order to reduce the quality, and likewise the burden, on radio modem 610 in step 1212 in accordance with any of the previous disclosed signal quality adjustment processes. This monitoring process may continue to balance the load on radio module 610 starting in step 1208 until the resources in WCD 100 are appropriately allocated between the radio modules 610 (e.g., the answer to step 1210 is "no") and the transmission for all active radio modules has completed in step 1214. Then the process may restart again at 1200, or may obtain schedule information at step 1216 if MRC 600 is present.

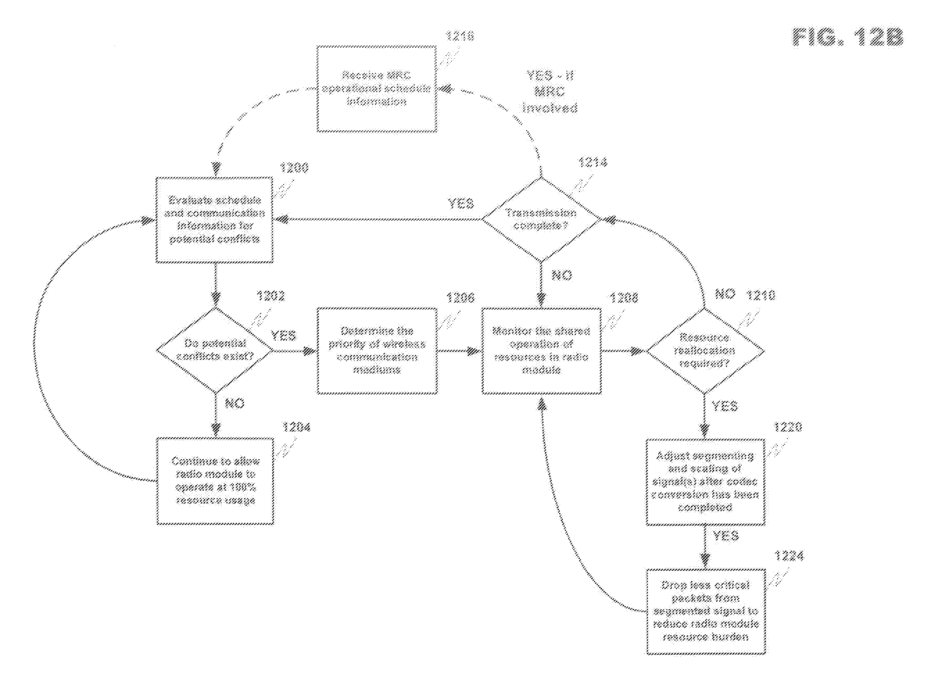

FIG. 12B discloses a process similar to FIG. 12A except that the determination in step 1210 that resource reallocation is required between radio modems 610 may cause a bitrate scaling process to occur on one or more signals starting in step 1220. In step 1220 information received from MRC 600 (if present in WCD 100) as well as information from other radio modules 610 may be utilized in order to determine how to segment and scale packets received from codec 532. The segmentation and scaling may determine based on the bandwidth and available air time how small to subdivide the packets. Then in step 1224, less critical packets from one or more communication signals may be discarded. The elimination of these less critical packets may reduce the quality of the signal, but will also reduce the load on shared resources in WCD 100 and may further allow all communication to proceed without failure.

Accordingly, it will be apparent to persons skilled in the relevant art that various changes in forma and detail can be made therein without departing from the spirit and scope of the invention. This the breadth and scope of the present invention should not be limited by any of the above-described exemplary embodiments, but should be defined only in accordance with the following claims and their equivalents.

## Claims

1. A method, comprising:
receiving one or more indications of a change in activity for an interfering wireless communication medium utilized by a radio module operating in a wireless communication device;
determining whether the change in activity of the interfering wireless communication medium meets a predetermined threshold level; and
if the change in activity meets the predetermined threshold level, instructing modifications to a codec being utilized by the radio module.

2. The method of claim 1, wherein determining whether the change in activity of the interfering wireless communication medium meets a predefined threshold level includes determining if the utilization rate of physical layer components by the interfering wireless communication medium exceeds a predetermined utilization level.

3. The method of claim 1, wherein the codec is at least one of an audio codec or a video codec.

4. The method of claim 1, wherein instructing modifications to a codec includes changing the quality level of a signal produced by the codec.

5. The method of claim 4, wherein changing the quality level of a signal produced by the codec includes at least one of changing the bit rate of the codec or changing to another codec with a different bit rate.

6. The method of claim 4, wherein changing the quality level of a signal produced by the codec includes segmenting audio message packets into smaller sized audio packets and discarding any non-essential audio message packets.

7. The method of claim 4, wherein changing the quality level of a signal produced by the codec includes a determination of priority between all interfering radio modules in order to determine how to change the quality level of the codec.

8. The method of claim 7, wherein the quality level produced by a codec supporting a low priority radio module is reduced in order to provide additional resources for a high priority radio module.

9. The method of claim 7, wherein the quality level produced by a codec supporting a high priority radio module is reduced in order to provide additional resources for other radio modules in the wireless communication device.

10. The method of claim 1, wherein at least the threshold level is set by a multiradio controller that manages the operation of a plurality of radio modules in the wireless communication device.

11. The method of claim 10, further comprising receiving, from the multiradio controller, an operational schedule including at least one period of time when a radio module is allowed to communicate.

12. A computer program product comprising a computer usable medium having computer readable program code embodied in said medium, comprising:
a computer readable program code for receiving one or more indications of a change in activity for an interfering wireless communication medium utilized by a radio module operating in a wireless communication device;
a computer readable program code for determining whether the change in activity of the interfering wireless communication medium meets a predetermined threshold level; and
a computer readable program code for, if the change in activity meets the predetermined threshold level, instructing modifications to a codec being utilized by the radio module.

13. The computer program product of claim 12, wherein determining whether the change in activity of the interfering wireless communication medium meets a predefined threshold level includes determining if the utilization rate of physical layer components by the interfering wireless communication medium exceeds a predetermined utilization level.

14. The computer program product of claim 12, wherein the codec is at least one of an audio codec or a video codec.

15. The computer program product of claim 12, wherein instructing modifications to a codec includes changing the quality level of a signal produced by the codec.

16. The computer program product of claim 15, wherein changing the quality level of a signal produced by the codec includes at least one of changing the bit rate of the codec or changing to another codec with a different bit rate.

17. The computer program product of claim 15, wherein changing the quality level of a signal produced by the codec includes segmenting audio message packets into smaller sized audio packets and discarding any non-essential audio message packets.

18. The computer program product of claim 15, wherein changing the quality level of a signal produced by the codec includes a determination of priority between all interfering radio modules in order to determine how to change the quality level of the codec.

19. The computer program product of claim 18, wherein the quality level produced by a codec supporting a low priority radio module is reduced in order to provide additional resources for a high priority radio module.

20. The computer program product of claim 18, wherein the quality level produced by a codec supporting a high priority radio module is reduced in order to provide additional resources for other radio modules in the wireless communication device.

21. The computer program product of claim 12, wherein at least the threshold level is set by a multiradio controller that manages the operation of a plurality of radio modules in the wireless communication device.

22. The computer program product of claim 21, further comprising receiving, from the multiradio controller, an operational schedule including at least one period of time when a radio module is allowed to communicate.

23. A device comprising:
one or more radio modules; and
at least one multiradio controller coupled to the one or more radio modules;
wherein the device is configured to:
receive one or more indications of a change in activity for an interfering wireless communication medium utilized by the one or more radio modules operating in a wireless communication device;
determine whether the change in activity of the interfering wireless communication medium meets a predetermined threshold level; and
if the change in activity meets the predetermined threshold level, instruct modifications to a codec being utilized by the one or more radio modules.

24. The device of claim 23, wherein the interfering wireless communication medium is one of a plurality of wireless communication mediums utilized by a multimode radio module.

25. The device of claim 23, wherein a plurality of wireless communication mediums are utilized by radio modules which share hardware resources in the wireless communication device including at least an antenna.

26. The device of claim 23, wherein determining whether the change in activity of the interfering wireless communication medium meets a predefined threshold level includes determining if the utilization rate of physical layer components by the interfering wireless communication medium exceeds a predetermined utilization level.

27. The device of claim 23, wherein the codec is at least one of an audio codec or a video codec.

28. The device of claim 23, wherein instructing modifications to a codec includes changing the quality level of a signal produced by the codec.

29. The device of claim 28, wherein changing the quality level of a signal produced by the codec includes at least one of changing the bit rate of the codec or changing to another codec with a different bit rate.

30. The device of claim 28, wherein changing the quality level of a signal produced by the codec includes segmenting audio message packets into smaller sized audio packets and discarding any non-essential audio message packets.

31. The device of claim 28, wherein changing the quality level of a signal produced by the codec includes a determination of priority between all interfering radio modules in order to determine how to change the quality level of the codec.

32. The device of claim 31, wherein the quality level produced by a codec supporting a low priority radio module is reduced in order to provide additional resources for a high priority radio module.

33. The device of claim 31, wherein the quality level produced by a codec supporting a high priority radio module is reduced in order to provide additional resources for other radio modules in the wireless communication device.

34. The device of claim 23, wherein at least the threshold level is set by a multiradio controller that manages the operation of a plurality of radio modules in the wireless communication device.

35. The device of claim 34, further comprising receiving, from the multiradio controller, an operational schedule including at least one period of time when a radio module is allowed to communicate.

36. A device, comprising:
means for receiving one or more indications of a change in activity for an interfering wireless communication medium utilized by a radio module operating in a wireless communication device;
means for determining whether the change in activity of the interfering wireless communication medium meets a predetermined threshold level; and
means for, if the change in activity meets the predetermined threshold level, instructing modifications to a codec being utilized by a radio module.

37. A radio module, comprising:
a radio modem; and
a local controller coupled to the radio modem, the local controller configured to:
receive one or more indications of a change in activity for an interfering wireless communication medium utilized by a radio module operating in a wireless communication device;
determine whether the change in activity of the interfering wireless communication medium meets a predetermined threshold level; and
if the change in activity meets the predetermined threshold level, instruct modifications to a codec being utilized by the radio module.

38. The radio module of claim 37, wherein determining whether the change in activity of the interfering wireless communication medium meets a predefined threshold level includes determining if the utilization rate of physical layer components by the interfering wireless communication medium exceeds a predetermined utilization level.

39. The radio module of claim 37, wherein the codec is at least one of an audio codec or a video codec.

40. The radio module of claim 37, further comprising receiving, from a multiradio controller, an operational schedule including at least one period of time when the radio module is allowed to communicate.

41. A system, comprising:
a wireless communication device, the wireless communication device including at least:
one or more radio modules utilizing a plurality of wireless communication mediums;
at least one of the one or more radio modules receiving one or more indications of a change in activity for an interfering wireless communication medium utilized by another radio module operating in a wireless communication device;
the at least one radio module determining whether the change in activity of the interfering wireless communication medium meets a predetermined threshold level; and
the at least one radio module, if the change in activity meets the predetermined threshold level, instructing modifications to a codec being utilized by the at least one radio module.

42. A method, comprising:
receiving, from a multiradio controller, an operational schedule including at least one period of time when a radio module is allowed to communicate;
receiving one or more indications of a change in activity for an interfering wireless communication medium utilized by a radio module operating in a wireless communication device;
determining whether the change in activity of the interfering wireless communication medium meets a predetermined threshold level;
determining if the interfering wireless communication medium is allowed to communicate and has priority in view of the operational schedule information; and
if the change in activity meets the predetermined threshold level, the interfering wireless communication medium is allowed to communicate and has priority, instructing modifications to a codec being utilized by the radio module.

43. The method of claim 42, wherein instructing modifications to the codec includes changing the quality level of a signal produced by the codec.

44. A radio module comprising:
one or more antennas;
two or more radio modems, wherein the two or more radio modems are coupled with the one or more antennas; and
a controller, wherein the controller is configured to:
receive an operational schedule including at least one period of time when the radio module is allowed to communicate;
provide a schedule for utilization of wireless communication mediums for the two or more radio modems based on at least the received operational schedule;
receive one or more indications of a change in operational conditions for utilization of the wireless communication medium by one or more of said two or more radio modules;
determine whether the change in operational conditions for utilization of the wireless communication medium by one or more of said two or more radio modules meets a predetermined threshold level; and
if the change in operational conditions meets a predetermined threshold level, instruct modifications to a codec being utilized by one or more of said two or more radio modules.

45. The radio module of claim 44, wherein determining whether the change in operational conditions for utilization of the wireless communication medium by one or more of said two or more radio modules meets a predetermined threshold level includes determining if one or more of said two or more radio modules requires more time than scheduled for utilization of the wireless communication medium.
